(19)

**Europäisches Patentamt**

**European Patent Office**

**Office européen des brevets**

(11) **EP 4 141 809 B1**

(12) **EUROPEAN PATENT SPECIFICATION**

(45) Date of publication and mention
of the grant of the patent:
**28.01.2026  Bulletin 2026/05**

(21) Application number: **21194068.9**

(22) Date of filing: **31.08.2021**

(51) International Patent Classification (IPC):
***G06V 10/82*** *(2022.01)*

(52) Cooperative Patent Classification (CPC):
**G06V 10/82**

(54) **ROBUSTNESS EVALUATION OF COMPUTER VISION MODELS**

ROBUSTHEITSBEWERTUNG VON COMPUTERSICHTMODELLEN

ÉVALUATION DE LA ROBUSTESSE DE MODÈLES DE VISION PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.03.2023  Bulletin 2023/09**

(73) Proprietor: **Robert Bosch GmbH
70442 Stuttgart (DE)**

(72) Inventors:
- **Metzen, Jan Hendrik
  71034 Boeblingen (DE)**
- **Hein, Matthias
  72076 Tübingen (DE)**
- **Yatsura, Maksym
  72280 Dornstetten (DE)**

(56) References cited:
- **ANDRIUSHCHENKO MAKSYM ET AL: "Square Attack: A Query-Efficient Black-Box Adversarial Attack via Random Search", 23 August 2020, COMPUTER VISION - ECCV 2020 : 16TH EUROPEAN CONFERENCE, GLASGOW, UK, AUGUST 23-28, 2020 : PROCEEDINGS; [LECTURE NOTES IN COMPUTER SCIENCE ; ISSN 0302-9743], PAGE(S) 484 - 501, ISBN: 978-3-030-58594-5, XP047569608**

- **JIAWEI DU ET AL: "Query-efficient Meta Attack to Deep Neural Networks", ARXIV.ORG, CORNELL UNIVERSITY LIBRARY, 201 OLIN LIBRARY CORNELL UNIVERSITY ITHACA, NY 14853, 6 June 2019 (2019-06-06), XP081373743**
- **CHEN MA ET AL: "Switching Gradient Directions for Query-Efficient Black-Box Adversarial Attacks", ARXIV.ORG, CORNELL UNIVERSITY LIBRARY, 201 OLIN LIBRARY CORNELL UNIVERSITY ITHACA, NY 14853, 15 September 2020 (2020-09-15), XP081763581**
- **ZHENG YUAN ET AL: "Meta Gradient Adversarial Attack", ARXIV.ORG, CORNELL UNIVERSITY LIBRARY, 201 OLIN LIBRARY CORNELL UNIVERSITY ITHACA, NY 14853, 9 August 2021 (2021-08-09), XP091031707**

**Description**

**FIELD OF THE INVENTION**

The invention relates to a computer-implemented method of evaluating a robustness of a computer vision model, and to a corresponding system. The invention further relates to a computer-implemented method of determining a strategy model for such a robustness evaluation, and to a corresponding system. The invention further relates to a computer-readable medium.

**BACKGROUND OF THE INVENTION**

More and more autonomous vehicles are on the roads today that rely on computer vision models to make automated decisions. Such models are typically trained to learn patterns from a training dataset of traffic situations and then to apply these learned patterns to the actual traffic that is around them. For example, such models may be applied in a lane keeping system (LKS), in an autonomous emerging braking system (AEBS), or more generally in an autonomous driving or driving assistance system. This is an example of a safety-critical application of computer vision models, since a wrong decision by the computer vision model can lead to dangerous traffic situations where accidents may occur.

In order to obtain assurance that a trained computer vision model is sufficiently reliable to be put to real-world use, its robustness may be evaluated. For example, such an evaluation can be used as a debugging tool for model designers. Or, it may be required that the computer vision model passes one or more robustness tests, to be carried out by the producer or by a certification authority, before it is allowed to be deployed. These tests are particularly important for models that are trained using machine learning, such as neural networks, since these models are known to be potentially susceptible to so-called adversarial examples: perturbations in an input image that are small and often even imperceptible, yet can have a big effect on the model's output. Robustness against such adversarial examples means that it is harder to deliberately affect its output, but also more generally that the model is expected to be more robust in the face of unexpected situations.

In M. Andriushchenko et al., "Square Attack: a query-efficient black-box adversarial attack via random search" (available at https://arxiv.org/abs/1912.00049 and incorporated herein by reference), a technique is presented to find so-called adversarial examples: perturbations to an input of a trained classifier that are small, yet succeed in changing the classification that the classifier provides. Such an attack technique can be used to evaluate robustness by determining an effectiveness of the attack: the harder it is to find an effective attack, the more robust the model is.

The technique of Andriushchenko is a black-box technique, that is, it uses the outputs of the classifier but does not have access to internals of the classifier. The technique uses random search: it iteratively selects localized square-shaped updates at random positions to find a perturbation that affects the classification. One advantage of black-box attacks is their wide applicability; in particular, they can be applied in situations where the gradient of the model with respect to the input image cannot be computed, is uninformative, or no differential implementation is available. Specifically, black-box attacks also work on models on which so-called gradient obfuscation has been applied: a technique that makes it harder to find perturbations using gradient-based techniques, but that does not eliminate their existence. More generally, it is known from the literature that black-box attacks provide a useful perspective on the true robustness of the model and are thus recommended for reliable robustness evaluation.

**SUMMARY OF THE INVENTION**

A disadvantage of existing black-box attack techniques for robustness evaluation, is that the effectiveness of the attack depends heavily upon manually specified schedules and update distributions that are used internally in the random search and that needs to be tuned for every use case. This makes robustness evaluations based on such attacks less reliable: if an adversarial example has not been found, it is not clear whether this is because such an adversarial example does not exist or just because the attack was not able to find it.

It would be desirable to evaluate robustness of a target computer vision model using a black-box attack, where the black-box attack is more versatile and thus applicable to a wider range of computer vision models. It would also be desirable to make such black-box attacks easier to use. It would also be desirable for such attacks to provide better approximations of the worst-case robustness of the computer vision model it is applied to, in particular in black-box setting where input gradients cannot be used.

In accordance with a first aspect of the invention, a computer-implemented method and a corresponding system are provided for evaluating a robustness of a target computer vision model, as defined by claims 2 and 13, respectively. In accordance with another aspect of the invention, a computer-implemented method and a corresponding system are provided for determining a strategy model for evaluating robustness of a target computer vision model, as defined by claims 1 and 14, respectively. In accordance with an aspect of the invention, a computer-readable medium is described as defined by claim 15.

Various aspects relate to robustness evaluation of a target computer vision model using a black-box attack.

An attack in this context is a method of finding perturbations to input images of the target computer vision model that affect the model output that the target computer vision model provides, e.g., that turn a correct classification of the model into an indefinite output or even a misclassification. By comparing an original model output for an input image to the model output for a perturbation found by the black-box attack, an effectiveness of the black-box attack can be determined, and thereby a robustness measure for the model: the more effective the attack, the less robust the model. The attack may be according to a given threat model, meaning that perturbations are restricted in size according to a given metric, e.g., the $\ell_2$ or $\ell_\infty$ norm.

In a black-box attack, the internals of the target computer vision model may not be used in the attack, e.g., the target computer vision model may be accessed only by providing respective input images to the model and getting the respective model outputs of the target computer vision model in return. Such black-box attacks may be preferred because of their generality: black-box attacks can work on a wide range of models without requiring additional assumptions on the way they operate or can be accessed. For example, black-box attacks as described herein may be applied to models that are remotely accessed, e.g., from the cloud, and/or that are part of a larger system that is being evaluated and that is not available in such a form that a non-black-box attack can be applied to it.

Another type of access is white-box access, which, in addition to applying the model, can access inner states (e.g. intermediate values), parameters, and/or information about the model structure of the computer vision model. In particular, with white-box access, the model may be accessible in such a way that gradients of the model can be accurately computed to derive training signals. In particular, by applying so-called gradient obfuscation techniques to a computer vision model, effective computation of its gradient may be made unfeasible, or in any case, such computation may not provide meaningful results anymore, such that white-box access to such a model is considered to be unavailable.

In particular, the black-box attack may be a random search-based black-box attack. In a random search-based black-box attack, a current perturbation is iteratively updated by determining an update, and applying it to the current perturbation. Having applied the update, the computer vision model may be applied to the input image perturbed according to the updated current perturbation to determine its effect. The update is typically determined according to a non-deterministic procedure, e.g., the update may be sampled from a certain sampling distribution (also known as the proposal distribution). This is not needed, however, e.g., the update may be determined deterministically based on the current perturbed image. The iterative procedure may be performed up to a certain maximum number of steps and/or until convergence. The procedure may return the most effective perturbation found, and accordingly, the effectiveness of this perturbation may provide a lower bound estimate of the possible effectiveness of attacks, and thus an upper bound estimate of the robustness of the model.

Interestingly, instead of using a heuristically designed update distribution for the black-box attack, the inventors envisaged to use a trained strategy model. The strategy model is typically non-deterministic, e.g., it may involve sampling. To determine the update, it uses trained parameters, e.g., it uses a model parameterized by the trained parameters to determine values according to which the update is sampled. In order to train this strategy model, white-box access to one or more source computer vision models is used. In the training, the black-box attack is applied to the source computer vision model(s) and to training image(s) for that source model(s) to determine an effectiveness of the black-box attack. For this, per se, black-box access to the model(s) may suffice. Interestingly, however, the fact that white-box access to the model(s) is possible, e.g., gradients can be computed, may allow to derive a training signal from the determined effectiveness, e.g., to update the parameters of the trained strategy model to increase the effectiveness of the attack.

Thus, a training phase may be performed in which white-box access to computer vision models is available, by which it becomes possible to teach the strategy model how to carry out an attack in a later application phase (possibly carried out by a different party) to (typically different) computer vision models to which only black-box access is available at that point.

Effectively, the trained strategy model may provide a controller that can be plugged into a black-box attack method and that can adapt the proposal distribution online to the respective data and model under attack. The controller may be trained end-to-end, e.g., with gradient-based meta-learning, on models with white-box access. Once trained, learned controllers can be applied to unseen data and models with only black-box access. It is also not needed to have white-box access during the attack to a particular model similar to the black-box model under attack, as is the case for other known techniques. In experiments, the inventors observed consistent improvements on unseen models, e.g., with a query budget of 500 queries, a 6% improvement in robust accuracy with respect to existing hand-designed search distributions was observed.

Interestingly, these improvements were reached without the need to perform manual fine-tuning as in the prior art. Thus, the proposed techniques provide a more accurate and more versatile indication of the feasibility of a black-box attack, and thus a more accurate and reliable robustness evaluation. Fine-tuning is circumvented, and the amount of manual design is reduced. This makes the obtained results more reliable and also makes the techniques more easily applicable, since the design of problem-specific components of the random-search procedure is effectively automated.

Importantly, once trained, the controllers do not require any gradient access and can thus be used in a fully black-box setting; for example, they may not be affected by gradient obfuscation.

The techniques were found to work and provide improvements in various query regimes, e.g., using different numbers of invocations of the target computer vision model by the black-box attack. For example, the number of invocations may be at most or at least 100, at most or at least 250, at most or at least 1000, or at most or at least 2000. The improvements compared to existing techniques were found to be particularly strong when at most 2000, or more preferably, at most 1000, queries to the model were performed.

Optionally, the target computer vision model may be an image classifier. Image classifiers are widely used and their outputs are known to be potentially affectable by perturbations, making it particularly important to accurately measure their robustness against black-box attacks. Generally, an image classifier may map an input image to one or more classification outputs. For example, the image classifier may classify the image into a class from a set of multiple classes, e.g., indicating presence of respective objects in the image. Similarly, the image classifier may be a detection model, e.g., a function providing a classification output indicating whether or not an object is present in the entire image or in a segment of the image. The image classifier can also be a semantic segmentation model, e.g., a function providing multiple classification outputs indicating presence of objects in respective pixels or segments of the image.

The target computer vision model may be configured for various types of input image data, e.g., video data, radar data, LiDAR data, ultrasonic data, motion data, thermal image data, etcetera. For example, the model may be configured to classify (e.g., identify, detect, or segment) traffic signs, road surfaces, pedestrians, and/or vehicles in an image, or to perform any other supervised task. In principle, the provided techniques may also be applied to other types of machine learnable model, e.g., models that are trained to be applied to other types of sensor data, e.g., data representing a time series of measurements of one or more sensors. Also such data may e.g. be affected by sensor misreadings or may in some cases be very different from the data that the model was trained on, so also in this case, it is important to have an accurate estimate of the robustness of the model.

The target computer vision model of which the robustness is evaluated, may be used to compute a control signal for controlling a physical system. For example, the trained model may be distributed along with a certification that the model has been evaluated to be sufficiently robust. When obtaining the model to apply it, a party may check the certification to see whether the model is sufficiently robust, e.g., by comparing the robustness measure to a threshold, e.g., a device-dependent threshold. The model may be used if it is sufficiently robust. Otherwise, any appropriate action may be taken, for example, a safe fallback may be used, an alert may be raised, the model output may be assigned a lower weight, etc. The physical system can for example be a computer-controlled machine, such as a robot, a vehicle, a domestic appliance, a power tool, a manufacturing machine, a personal assistant or an access control system. The physical system can also be a system for conveying information, such as a surveillance system or a medical (imaging) system. For example, the model may be used by classifying sensor data and then operating the physical system accordingly.

Optionally, applying the random search-based black-box attack to a computer vision model and an image may comprise iteratively: updating the current perturbation according to the determined update, and applying the computer vision model to the input image perturbed according to the updated current perturbation, for example, for a maximum number of iterations, and/or staying within a certain threat model. By using such a fixed attack procedure, a robustness measure may be obtained that is mutually comparable to robustness measures for other models obtained using the same procedure.

Optionally, when performing the black-box attack, effects on the model output of the current perturbation and the updated current perturbation may be compared. Based on the compared effects, either the current perturbation or the updated current perturbation may be selected and set to be the current perturbation e.g. for the next iteration. Thus, it may be ensured that the effect of the perturbation continually increases.

Optionally, the strategy model may be configured to deterministically determine a first component of the update and/or to stochastically determine a second component of the update. For example, the first component may be determined by applying a first trainable submodel of the strategy model, e.g., a neural network, or the like. To obtain the second component, for example, a second trainable submodel of the strategy model may be applied that is itself deterministic and that returns parameters for sampling the second component. Or, a second trainable submodel may be applied that is itself stochastic, e.g., a Bayesian neural network or the like. The second component may also comprise stochastically determined values that are not based on any trainable parameters.

If the first and second components are both present, an overall update may be obtained based on the first and second components. Generally, the use of a stochastic component is beneficial since it allows to flexibly search for a good perturbation, e.g., in subsequent iterations. On the other hand, a deterministic component is much more efficient since it ensures that the intended modification is directly made. By combining a deterministic and stochastic component, the scope of the search can be restricted while still providing sufficient flexibility to find a suitable perturbation.

Optionally, the strategy model may be configured to determine an output that represents a shape to be applied to the input image, e.g., by imposing a shape of a given size and/or colour and/or position on the input image, or by applying an image transformation, e.g., a blur, to a portion of the image defined by a shape with a given size and/or position. In order to determine the shape, the strategy model may be configured to determine a shape size and/or a shape colour based on trained parameters, for example, deterministically or by determining parameters for sampling the shape size and/or shape colour. In one embodiment that was found to work particularly well in practice, the model deterministically determines the shape size according to a trainable submodel; stochastically determines the shape colour based on parameters determined by a trainable submodel; and stochastically determines the shape position without using a trainable submodel. In a variation of this embodiment that is also beneficial, the shape position may be determined using a trainable submodel.

Optionally, the strategy model may receive an input that depends on the current perturbation and on at least one perturbation prior to the current perturbation. Thus, the previous attack trajectory may be used by the strategy model. This previous trajectory implicitly contains information on the classifier when applied to the original unperturbed image, and on progressively constructed perturbations, allowing the strategy model to adapt to the computer vision model and data at hand. For example, an input to the strategy model may represent an effect of previous perturbations, e.g., an indicator of whether or to what extent adding one or more preceding perturbations increased an effectiveness. This allows to select the update based on recent successes or failures, thus allowing to adapt the attack to the model and data at hand. For example, the effect may be combined with an input representing a current time step in order to take into account both the current success and the overall stage (e.g. number of iterations remaining) of the attack.

Optionally, the strategy model may comprise a recurrent model, for example, a Long Short Term Memory (LSTM) model or any recurrent neural network. In an iteration, the model may be applied not just on the current perturbation, but also on an internal state that depends on prior perturbations. Since the way that the model updates its internal state is trainable, this allows the strategy model to effectively learn which information from previous iterations to remember, allowing it to use information from previous iterations more effectively.

Optionally, the strategy model does not receive the image or the image perturbed according to the current perturbation as input. By not using the image as an input, the strategy model may be encouraged to learn general attack strategies that apply regardless of what kind of images it is applied to, encouraging generalizability. Not using the image also makes the strategy model easier to train since it can be applied to a relatively small number of inputs and can have a relatively small number of parameters. In other embodiments, however, the image and/or the current perturbation are used.

Optionally, the robustness evaluation as described herein may be performed by the same party who has beforehand trained or re-trained the target computer vision model. For example, the target computer vision model may be periodically retrained based on updated training data. The retraining and subsequent robustness evaluation can be automatically initiated, for example. The robustness evaluation may be performed to determine if the target computer vision model is sufficiently robust, for example, by comparing a determined robustness measure to a threshold. For example, the target computer vision model may be rejected if the model is not sufficiently robust. In this case, for example, a previous version of the target computer vision model may be continued to be used, or a fallback model. For example, the target computer vision model may be certified if the model is sufficiently robust. The target computer vision model may then replace a previous version of the target computer vision model, for example. In some embodiments, the retraining, robustness evaluation, and rejection/certification/replacing can happen in a fully automated process, where the robustness evaluation reduces the chances that updating the target computer vision model has unintended consequences.

As illustrated in the above example, the party evaluating the robustness of the model may be the same party that also trains or retrains the model. However, this is not necessary. In some embodiments, the party performing the robustness evaluation obtains access to a model that has already been trained by a different party and then evaluates its robustness. This party may certify the model, e.g., by entering it on a list of certified models or by digitally signing the model. For example, the party may be an external certification authority that provides an obligatory robustness certification of models. In this setting, using a black-box model is particularly convenient because it does not require that the party performing the evaluation has knowledge about the internal structure of the model. In particular, interestingly, it is possible for the party evaluating the robustness to access the target computer vision model remotely from a remote device, wherein the target computer vision model is accessed by sending input images to the remote device and receiving corresponding model outputs in return.

Optionally, the training of the strategy model may comprise a gradient of the operation of determining an updated current perturbation from a current perturbation. The gradient may be with respect to the parameters of the strategy model. This gradient may be used to derive a training signal from which the parameters of the strategy model can be updated. It is noted that in the operation of determining the updated current perturbation, also the (non-updated) current perturbation may per se depend on the parameters of the strategy model since it may have been determined itself according to the strategy model. Interestingly, however, in computing the gradient of determining the updated current perturbation, the gradient of the current perturbation may be set to zero. This essentially corresponds to greedily optimizing the strategy model in a myopic way. In practice, it was found that this optimization resulted in better trained strategy models. Gradient-based optimization can also be used in case the process of determining the update to the current perturbation is not differentiable, by applying a differentiable relaxation during the training.

Optionally, the training of the strategy model is performed by applying a gradient-free optimization, for example, by performing an evolution strategy-based optimization. Various techniques for this are known per se and can be readily applied to the training of the strategy model. The use of gradient-free optimization is particularly beneficial if the dimensionality of the meta-representation is low. Interestingly, gradient-free optimization may also be used in situations where white-box access to source computer vision models is not available, e.g., the training signal may in this case be derived without using white-box access to the source computer vision model.

It will be appreciated by those skilled in the art that two or more of the above-mentioned embodiments, implementations, and/or optional aspects of the invention may be combined in any way deemed useful.

Modifications and variations of any system and/or any computer readable medium, which correspond to the described modifications and variations of a corresponding computer-implemented method, can be carried out by a person skilled in the art on the basis of the present description.

## BRIEF DESCRIPTION OF THE DRAWINGS

These and other aspects of the invention will be apparent from and elucidated further with reference to the embodiments described by way of example in the following description and with reference to the accompanying drawings, in which:

Fig. 1 shows a system for evaluating a robustness of a target computer vision model and/or determining a strategy model for such a robustness evaluation;
Fig. 2 shows a system for applying a computer vision model;
Fig. 3 shows a (semi-)autonomous vehicle;
Fig. 4 shows a detailed example of how to evaluate a robustness of a target computer vision model;
Fig. 5 shows a detailed example of how to use a trained strategy model to determine an update to a current perturbation in a black-box attack;
Fig. 6 shows a detailed example of how to determine a strategy model;
Fig. 7 shows a detailed example of how to determine a strategy model;
Fig. 8 shows a computer-implemented method of evaluating a robustness of a target computer vision model;
Fig. 9 shows a computer-implemented method of determining a strategy model for evaluating robustness of a target computer vision model;
Fig. 10 shows a computer-readable medium comprising data.

It should be noted that the figures are purely diagrammatic and not drawn to scale. In the figures, elements which correspond to elements already described may have the same reference numerals.

## DETAILED DESCRIPTION OF EMBODIMENTS

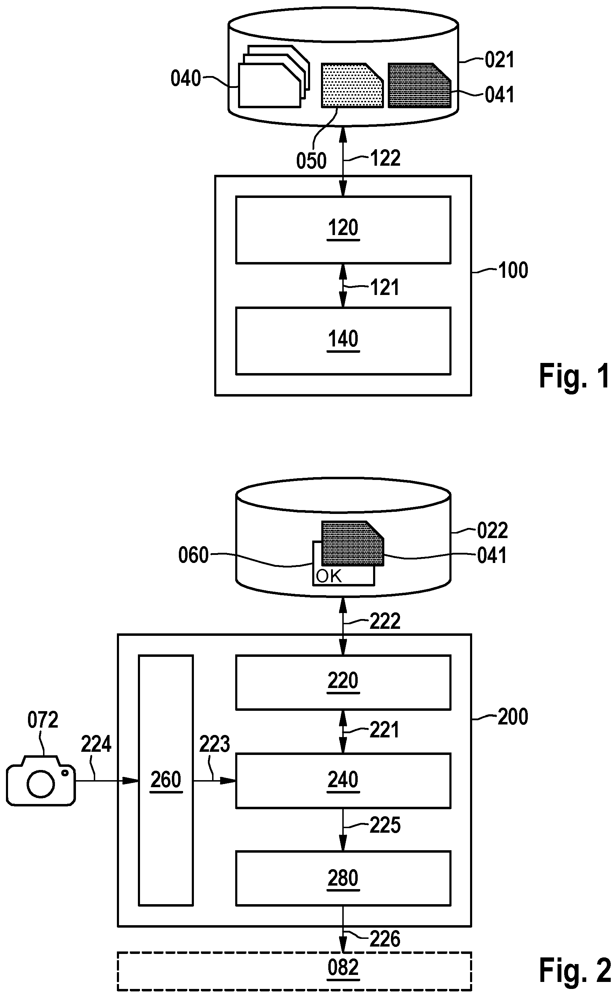

**Fig. 1** shows a system 100 for evaluating a robustness of a target model and/or determining a strategy model for evaluating such robustness. The target model may have been trained to determine a model output for an input instance, e.g., the target model may be a target computer vision model operating on input images, or a model operating on input time-series data. For example, system 100 may be configured to perform such training. The robustness evaluation may be according to a black-box attack. The black-box attack may comprise repeatedly determining an update to a current perturbation.

The system 100 may comprise a data interface 120. The data interface 120 may be for accessing various data. The data interface may be for accessing parameters 050 of a strategy model for use in the black-box attack to determine the update to the current perturbation. For example, the number of parameters may be at most or at least 50, at most or at least 100, or at most or at least 500. The strategy model may have been previously trained, or may be trained by system 100 itself.

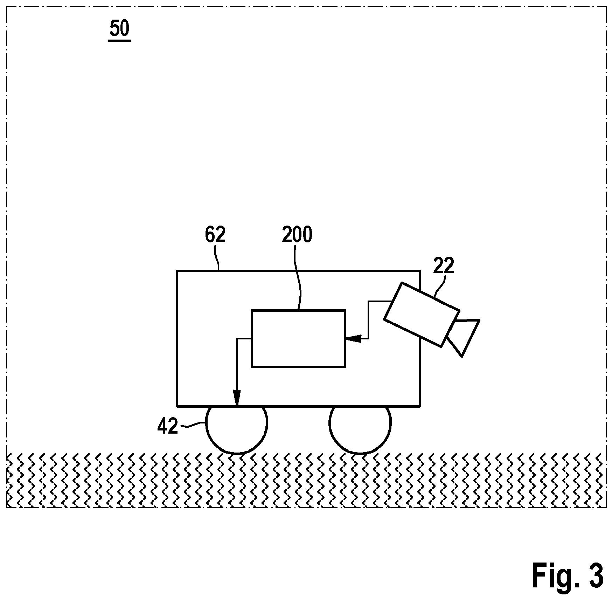

When system 100 is used to determine a strategy model, the data interface 120 may also be for obtaining white-box access to the one or more respective source models. For example, inner states, parameters, and/or information about the model structure of the source models may be accessed via data interface 120 and used to determine the strategy model. For example, the number of source models may be one, two, at most or at least five, or at most or at least ten. Data interface 120 may also be for accessing respective training datasets 040 of training instances, e.g. images, for respective source models for determining the strategy model. For example, the number of training instances for a source model may be at most or at least 500, at most or at least 1000, or at most or at least 2000. The determined strategy model may be used to evaluate robustness according to a method described herein, e.g., by system 100, by system 200 of Fig. 2 or system 200 of Fig. 3.

Data interface 120 may also be for accessing a target model of which the robustness is evaluated. Although white-box access to the target model may be possible, interestingly, the robustness evaluation may only access the target model in a black-box way, e.g., by querying the target model with respective inputs and getting respective model outputs of the target model in return.

For example, as also illustrated in Fig. 1, the input interface may be constituted by a data storage interface 120 which may access the data 040-050 from a data storage 021. For example, the data storage interface 120 may be a memory interface or a persistent storage interface, e.g., a hard disk or an SSD interface, but also a personal, local or wide area network interface such as a Bluetooth, Zigbee or Wi-Fi interface or an ethernet or fibreoptic interface. The data storage 021 may be an internal data storage of the system 100, such as a hard drive or SSD, but also an external data storage, e.g., a network-accessible data storage. In some embodiments, the data 040-050 may each be accessed from a different data storage, e.g., via a different subsystem of the data storage interface 120. Each subsystem may be of a type as is described above for data storage interface 120.

The system 100 may further comprise a processor subsystem 140.

The processor subsystem 140 may be configured to, during operation of the system 100, evaluate robustness of target model 041. To this end, processor subsystem 140 may be configured to obtain one or more inputs for the target model, for example, via data interface 120 or via a sensor interface as described with respect to Fig. 2. Processor subsystem 140 may be further configured to apply the black-box attack according to the trained strategy model 050 to the target model 041 and the one or more inputs to obtain perturbations for the one or more inputs. Processor subsystem 140 may be further configured to determine an effectiveness of the black-box attack by comparing model outputs of the target model 041 for the inputs and for the inputs perturbed according to the obtained perturbations. Processor subsystem 140 may be further configured to output a robustness measure based on the determined effectiveness.

Instead or in addition to this robustness evaluation, processor subsystem 140 may be configured to determine a strategy model for carrying out such robustness evaluations. To determine the strategy model, the processor subsystem 140 may be configured to apply the black-box attack according to the strategy model 050 to a source computer vision model and a training input 040 for the source computer vision model to obtain a perturbation for the training input. Processor subsystem 140 may be further configured to determine an effectiveness of the black-box attack for the training input 040 by comparing model outputs of the source computer model for the training input and for the training image perturbed according to the obtained perturbation. Processor subsystem 140 may be further configured to, using the white-box access to the source computer vision model, derive a training signal from the determined effectiveness. Processor subsystem 140 may be further configured to update parameters 050 of the strategy model based on the training signal.

As an alternative to accessing the target model 041 via a data interface, it is also possible for system 100 to obtain access to the target model that is provided by a remote device. For example, system 100 may comprise a communication interface (not shown) for communicating with the remote device. The communication interface may be arranged for direct communication with the remote device, e.g., using USB, IEEE 1394, or similar interfaces. The communication interface may also communicate over a computer network, for example, a wireless personal area network, an internet, an intranet, a LAN, a WLAN, etc. For instance, the communication interface may comprise a connector, e.g., a wireless connector, an Ethernet connector, a Wi-Fi, 4G or 4G antenna, a ZigBee chip, etc., as appropriate for the computer network. The communication interface may also be an internal communication interface, e.g., a bus, an API, a storage interface, etc. System 100 may access the target model via the communication interface by sending model inputs to the remote device and receiving corresponding model outputs in return.

The system 100 may further comprise an output interface for outputting a determine strategy model and/or a determined robustness measure. For example, as also illustrated in Fig. 1, the output interface may be constituted by the data interface 120, with said interface being in these embodiments an input/output ('IO') interface, via which the outputs may be stored in the data storage 021. In particular, parameters 050 defining an 'untrained' strategy model may during or after the training be replaced, at least in part, by parameters of the trained strategy model to reflect the training on the training data 040. This is also illustrated in Fig. 1 by data 050 representing both the trained and untrained strategy model. In other embodiments, the trained strategy model may be stored separately from the parameters defining the 'untrained' strategy model. In some embodiments, the output interface may be separate from the data storage interface 120, but may in general be of a type as described above for the data storage interface 120.

**Fig. 2** shows a system 200 for applying a trained model 041. The trained model may have been trained to determine a model output for a model input. For example, the trained model may be computer vision model operating on input images. The training may include an evaluation of the robustness of the target computer vision model, e.g., the trained model may have been found to be sufficiently robust according to a robustness evaluation described herein. For example, the training, or at least the robustness evaluation, may have been performed as described herein, e.g., by system 100 of Fig. 1. System 200 may be combined with system 100, e.g., system 200 may be configured to train or retrain the model 041 and/or to evaluate its robustness in addition to applying the model 041.

The system 200 may comprise a data interface 220 for accessing data 041 representing the trained model 041. As shown in the figure, the data interface may also be for accessing a certification 060 of the trained model, for example, a digital signature or the like. In the example shown in the figure, the certification is attached to the trained model, but this is not necessary, e.g., certification may be in the form of placing the model on a list of certified models external to the model data 041 itself. The storage storing the trained model 041 and/or its certification 060 may be comprised in system 200.

For example, as also illustrated in Fig. 2, the data interface may be constituted by a data storage interface 220 which may access the data 041, 060 from a data storage 022. In general, the data interface 220 and the data storage 022 may be of a same type as described with reference to Fig. 1 for the data interface 120 and data storage 021.

The system 200 may further comprise a processor subsystem 240 which may be configured to, during operation of the system 200, apply the model 041 to a model input to obtain a model output. The system 200 may optionally be configured to verify the certification 060 of the trained model 041, e.g., once upon obtaining the trained model, or every time the trained model is used, for example, by verifying a digital signature forming the certification 060, or by checking that the trained model, e.g., a digest of it, is included in a list of certified models forming the certification 060. For example, system 200 may use the model only if it certified.

It will be appreciated that the same considerations and implementation options apply for the processor subsystem 240 as for the processor subsystem 140 of Fig. 1. It will be further appreciated that the same considerations and implementation options may in general apply to the system 200 as for the system 100 of Fig. 1, unless otherwise noted.

Fig. 2 further shows various optional components of the system 200. For example, in some embodiments, the system 200 may comprise a sensor interface 260 for directly accessing sensor data 224 acquired by a sensor 072 in an environment 082. The model 041 may be applied to the sensor data 224. The sensor may be arranged in environment 082 but may also be arranged remotely from the environment 082, for example if the quantity(s) can be measured remotely. The sensor 072 may but does not need to be part of the system 200. The sensor 072 may have any suitable form, such as an image sensor, a lidar sensor, a radar sensor, a pressure sensor, a contain temperature sensor, etc. In particular, the sensor interface 260 may be an image interface for obtaining input images for a computer vision model 041. The sensor data interface 260 may have any suitable form corresponding in type to the type of sensor, including but not limited to a low-level communication interface, e.g., based on I2C/SPI data communication, or a data storage interface of a type as described above for the data interface 220.

In some embodiments, the system 200 may comprise an actuator interface 280 for providing control data 226 to an actuator (not shown) in the environment 082. Such control data 226 may be generated by the processor subsystem 240 to control the actuator based on the model output of the model 041. For example, the model output, e.g., a classification, may be input to a control module that determines the control data, or the model 041 itself may directly output the control data 226. The actuator may be part of system 200. For example, the actuator may be an electric, hydraulic, pneumatic, thermal, magnetic and/or mechanical actuator. Specific yet non-limiting examples include electrical motors, electroactive polymers, hydraulic cylinders, piezoelectric actuators, pneumatic actuators, servomechanisms, solenoids, stepper motors, etc. Such type of control is described with reference to Fig. 3 for an (semi-)autonomous vehicle.

In other embodiments (not shown in Fig. 2), the system 200 may comprise an output interface to a rendering device, such as a display, a light source, a loudspeaker, a vibration motor, etc., which may be used to generate a sensory perceptible output signal which may be generated based on the model output of model 041. The sensory perceptible output signal may be directly indicative of the model output, but may also represent a derived sensory perceptible output signal, e.g., for use in guidance, navigation or other type of control of the physical system.

In general, each system described in this specification, including but not limited to the system 100 of Fig. 1 and the system 200 of Fig. 2, may be embodied as, or in, a single device or apparatus, such as a workstation or a server. The device may be an embedded device. The device or apparatus may comprise one or more microprocessors which execute appropriate software. For example, the processor subsystem of the respective system may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the processor subsystem of the respective system may be implemented in the device or apparatus in the form of programmable logic, e.g., as a Field-Programmable Gate Array (FPGA). In general, each functional unit of the respective system may be implemented in the form of a circuit. The respective system may also be implemented in a distributed manner, e.g., involving different devices or apparatuses, such as distributed local or cloud-based servers. In some embodiments, the system 200 may be part of vehicle, robot or similar physical entity, and/or may be represent a control system configured to control the physical entity.

**Fig. 3** shows an example of the above, in that the system 200 is shown to be a control system of an (semi-) autonomous vehicle 62 operating in an environment 50. The autonomous vehicle 62 may be autonomous in that it may comprise an autonomous driving system or a driving assistant system, with the latter also being referred to as a semiautonomous system. The autonomous vehicle 62 may for example incorporate the system 200 to control the steering and the braking of the autonomous vehicle based on sensor data obtained from a video camera 22 integrated into the vehicle 62. For example, the system 200 may control an electric motor 42 to perform (regenerative) braking in case the autonomous vehicle 62 is expected to collide with a traffic participant. The system 200 may control the steering and/or braking to avoid collision with the traffic participant. For that purpose, the system 200 may apply a computer vision model trained and evaluated to be robust as described herein, e.g., to detect the presence of the traffic participant or more generally to detect a dangerous traffic situation. If a dangerous traffic situation is detected, the system 200 may take corresponding action.

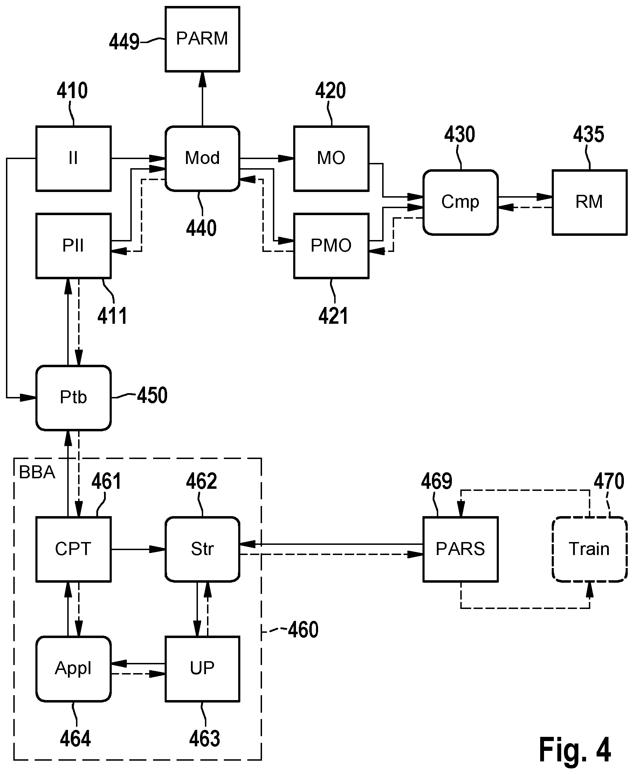

**Fig. 4** shows a detailed, yet non-limiting, example of how to evaluate a robustness of a target model.

Shown in the figure is a target model **Mod,** 440, of which robustness is to be evaluated. Model **Mod** is in this example a computer vision model configured to determine a model output **MO,** 420 for an input image **II,** 410. For example, the model can be an image classifier, with model output **MO** representing a classification of the input image **II** into a class from a set of classes, a semantic segmentation of the input image **II,** or one or more indicators of the presence of particular objects in the input image **II,** or the like. The example of this figure readily generalizes to models applied to other inputs than images.

As shown in the figure, the target model **Mod** may be parameterized by a set of parameters **PARM,** 449. For example, the target model **Mod** can be a neural network or any type of machine learnable model. Interestingly, when evaluating the robustness, the parameters **PARM** may not be directly accessed other than those parameters being used to apply the model **Mod** to respective input images. That is, the target model **Mod** may be accessed in a black-box way, e.g., locally or remotely.

In this example, robustness is evaluated using a black-box attack **BBA,** 460. Specifically, the black-box attack may be a random-search (RS) based adversarial attacks. Such an attack may approximate adversarial robustness of the model **Mod.** Denoting the model as a function $f$, attack **BBA** may be carried out as follows. The attack may have a query budget $T$, meaning that the attack may comprise at most $T$ evaluations of the model **Mod,** for example, at most 2000 or at most 1000 evaluations.

The attack may comprise computing a worst-case perturbation $\xi = \xi^T$ for an input image **II** by iteratively determining an update **UP,** 463, to a current perturbation **CPT,** 461; updating **Appl,** 464 the current perturbation **CPT** according to the determined updated update **UP;** perturbing **Ptb,** 450 the input image **II** to obtain perturbed input image **PII,** 411; and applying the model **Mod** to the perturbed input image **PII** to obtain a perturbed model output **PMO,** 421. By comparing **Cmp,** 430 the model outputs **MO, PMO** of the target model **Mod** for the input image **II** itself and for input image **PII** perturbed according to the current perturbation **CPT,** a current effectiveness of the black-box attack may be determined. For example, the effects on the model output of the current perturbation and the updated current perturbation may be compared, and the current perturbation or the updated current perturbation may be selected based on the compared effects. The eventual effectiveness of the black-box attack **BBA** may be used to define a robustness measure **RM,** 435, for the model **Mod,** e.g., the robustness measure **RM** may be a maximum, average, or other aggregate of the effectiveness of the attack for respective input images **II.**

The above black-box attack **BBA** may be implemented as follows:

$$\xi^0 \sim D^0; \quad \xi_{t+1} = \mathrm{argmax}_{\xi \in \{\xi^t, \Pi_S(\xi^t + \delta^{t+1})\}} \ L(f, x, y, \xi); \quad \delta^{t+1} \sim D^t.$$

Here, $L$ corresponds to a loss function that applies, **Ptb,** the perturbation $\xi$, **CPT** onto input $x$, **II,** to obtain $x_{adv} = a(x, \xi)$, **PII,** computes the output $y_{adv} = f(x_{adv})$, **PMO,** and computes a loss $l(y_{adv}, y)$, **RM.** Loss $l$ can be any loss suitable for the model **Mod,** e.g., a mean squared error, a cross-entropy loss, etc. For example, the loss can be the same loss that was used to train the model **Mod.**

Applying **Appl** the update **UP** to current perturbation **CPT** may comprise combining the update **UP** and the current perturbation **CPT,** e.g., additively, e.g., $a(x, \xi) = \max(\min(x + \xi, 1), 0)$. The applying **Appl** may further comprise projecting this combination to a perturbation set $\Pi_S$, e.g., the perturbations may be limited to have a norm smaller than or equal to a threshold, e.g., $S = \{\xi \mid \|\xi\|_p \leq \epsilon\}$. For example, the norm can be a $\ell_\infty$ norm, or the like. The combination of additive updates and a $p$-norm is also referred to as the $\ell_p$-ball threat model.

For perturbing **Ptb** the input image **II** according to the perturbation there are various options, e.g., the perturbation can be additively applied, may comprise computing a maximum or minimum of the image and the perturbation **CPT,** or may comprise applying an operation to the input image **II** as specified by the perturbation, such as a blur. Various types of perturbations and perturbation updates are known per se and can be applied herein.

In the above example, $D^0$ represents an initial distribution of perturbations, and $D^t$ represents a distribution of perturbation updates. Interestingly, in black-box attack **BBA** shown in the figure, a trained strategy model **Str,** 462, is used to at least determine the update **UP** to the current perturbation **CPT,** in other words, the update distribution may be defined by strategy model **Str.** The initial distribution $D^0$ can be defined by the strategy model as well, but this is not needed. The strategy model **Str** may be trained as described herein. Generally, the strategy model **Str** does not have access to the computer vision model **Mod,** allowing the attack to be carried out in a black-box way. Generally, black-box attack **BBA** may be regarded as providing a robustness measure **RM** that represents a lower bound to the so-called robustness evaluation problem. For example, model **Mod** may be a classifier $f: [0,1]^d \to \mathcal{P}(Y)$ which maps a $d$-dimensional input $x$ to $\mathcal{P}(Y) \in [0,1]^K$, which denotes the set of probability distributions over $K$ discrete possible outcomes, i.e., classes, $Y$. For a label $y \in Y$, a loss function $l: Y \times \mathcal{P}(Y) \mapsto \mathbb{R}$, a perturbation set $S$, and operator $a$, the robustness evaluation problem may be

defined as:

$$V(f, x, y) = \max_{\xi \in S} l\big(f\big(a(x, \xi)\big), y\big).$$

For a fixed loss function $l$ and operator $a$, the robustness evaluation problem may correspond to maximizing the functional $L$ $(f, x, y, \xi) := l(f(a(x,\xi)), y)$,

Generally, black-box attack **BBA** may be configured to provide an approximation to the robustness evaluation problem. The attack may be denoted as a, possibly non-deterministic, procedure $\mathcal{A}_\omega(L, f, x, y)$. The attack $\mathcal{A}_\omega$ is parametrized by hyperparameters $\omega$, **PARS,** 469. The attack may be designed with the intention that $\xi^\omega \sim \mathcal{A}_\omega(L, f, x, y)$ with $\xi^\omega) \in S$ becomes an approximate solution, e.g., a tight lower bound, of $V(f, x, y)$, that is $V(f, x, y) - L(f, x, y, \xi^\omega)$ becomes small in expectation. By optimizing the hyperparameters **PARS** of the attack, e.g.,

$$\max_\omega \mathbb{E}_{\xi^\omega \sim \mathcal{A}_\omega(L, f, x, y)} L(f, x, y, \xi^\omega),$$

a tighter lower bound of $V(f, x, y)$, and thus a more accurate reliability measure **RM,** may be achieved. In practice, it is often not feasible to compute this maximization exactly. This the case for example because the model **Mod** can only be accessed in a black-box way, and/or because it is feasible to query the model **Mod** only for a limited number of times, for because $\mathcal{A}_\omega$ can in many cases have high variance. Interestingly, using the techniques provided herein, a more accurate reliability measure **RM** can be determined without having to perform this exact optimization.

Generally, a strategy model **Str** may be any model trained suitable for determining updates to perturbations. The training **Train,** 470, of the strategy model **Str** is now discussed. To illustrate the training process, it is phrased as a meta-learning problem as discussed in T. Hospedales *et al.,* "Meta-Learning in Neural Networks: A Survey" (available at https://arxiv.org/abs/2004.05439 and incorporated herein by reference).

The strategy model **Str** may be trained, in other words, its parameters **PARS** may be optimized, in order to maximize the effect of perturbations found by the black-box attack **BBA,** e.g., in expectation across a set of source computer vision models, sets of training images for the respective source computer vision models, and/or the attack itself. This may be phrased as a meta-objective as follows. Assuming classifiers to be evaluated are governed by a distribution $f \sim \mathcal{F}$ and data by a distribution $(x, y) \sim D$, the meta-objective may be to find parameters $\omega^*$, **PARS,** of the attack $\mathcal{A}_\omega$ that maximize the lower bound $L(f, x, \gamma, \xi^\omega)$ of $V(f, x, y)$ in expectation across models $f \sim \mathcal{F}$, data $(x, y) \sim D$, and the stochastic attack $\xi^\omega \sim \mathcal{A}_\omega$, e.g.:

$$\omega^* = argmax_\omega \mathbb{E}_{f \sim \mathcal{F}} \mathbb{E}_{(x,y) \sim \mathcal{D}} \mathbb{E}_{\xi^\omega \sim \mathcal{A}_\omega(L, f, x, y)} L(f, x, y, \xi^\omega)$$

Interestingly, the optimization of **PARS,** which is typically expensive, may be amortized across models and data. To train the strategy model **Str,** finite sets of source models, e.g., classifiers, $F = \{f_j | f_j \sim \mathcal{F}\}$, and training data $D = \{(x_i, y_i)_{i=1}^N | (x_i, y_i) \sim \mathcal{D}\}$ for the source models may be used. The source models $f_j \in \mathcal{F}$ may allow white-box access, Moreover, their access may not need to adhere to the query budget, although performing training with a query budget is also possible.

The optimization of the parameters **PARS** may be phrased as a meta-training using the sets of source models and source model inputs. The objective of the meta-training may be described mathematically as $\omega^* = argmax_\omega R(F, D, \omega)$ with $R$ $(F, D, \omega) = \Sigma_{f \in F} \Sigma_{(x,y) \in D} L(f, x, y, \xi^\omega)$ and $\xi^\omega) \sim \mathcal{A}_\omega(L, f, x, y)$. The goal of the training may be phrased in terms of meta-testing as applying $\mathcal{A}_{\omega^*}$ to unseen $(x, y) \sim \mathcal{D}$ and unseen $f \sim \mathcal{F}$ that allow only black-box and query-limited access, and to maximize

$$\mathbb{E}_{\xi^\omega \sim \mathcal{A}_\omega(L, f, x, y)} L(f, x, y, \xi^\omega),$$

that is: the goal is to generalize across models and data.

Generally, the source models may be configured for the same task as the target model, e.g., their inputs and/or outputs may be of the same or at least of a similar shape as the inputs and outputs of the target model. It was also found that it is beneficial if the source models are selected to have a similar robustness as the target model, e.g., if the same kinds of robustness-improving techniques are applied across the models. This way, the black-box attack **BBA** may generalize better from the source models to the target model. On the other hand, the inventors found that it is less important for the source models and the target model to be trained on inputs with similar contents, e.g., similar-looking images, and/or for the source and target models to share a common model architecture. Also if this is not the case, the black-box attack **BBA** can typically generalize to the target model.

Interestingly, it was found that a small number of source models can suffice to successfully learn a strategy model **Str,** e.g., already a single source model may suffice, or at most five or at most ten source models may be used.

In terms of meta-learning, the black-box attack **BBA** may be described as a meta-representation, e.g., the meta-representation may describe how the adversarial attack $\mathcal{A}_\omega$ is designed and parametrized such that generalization across $f \sim \mathcal{F}$ is effective. In the present case, a random search based adversarial attack $\mathcal{A}_\omega$, **BBA** is used, as described above, e.g., defined by procedure

$$\xi^0 \sim \mathcal{D}^0; \quad \xi^{t+1} = argmax_{\xi \in \{\xi^t, \Pi_S(\xi^t + \delta^{t+1})\}} L(f, x, y, \xi); \quad \delta^{t+1} \sim \mathcal{D}_\omega(t, \xi^0, \delta^0, ..., \xi^t, \delta^t)$$

as discussed above. Interestingly, the strategy function **Str** defining the distribution $\mathcal{D}_\omega$ for the update proposals $\delta^{t+1}$ may be defined to be meta-learnable, for example, in combination with a fixed distribution $\mathcal{D}^0$ for initializing the perturbation $\xi^0$.

In particular, the strategy function **Str** may be defined to receive an input that depends on the current perturbation $\xi^t$ and on at least one perturbation prior to that, e.g., all prior perturbations $\xi^0, ..., \xi^{t-1}$. The strategy function **Str** may similarly depend on the current update, e.g., the update $\delta^t$ determined during the previous iteration, but on at least one previous update as well, e.g., all prior updates $\delta^0, ..., \delta^{t-1}$. Since this trajectory contains implicitly information on the model $f$ when applied to data $(x, y)$, the meta-learned random search attack can adapt to the classifier and data at hand. As illustrated by this example, one option is for the strategy model to not receive the image or the image perturbed according to the current perturbation as input. This may make it easier to train the strategy model **Str** and may result in a strategy model that generalizes better. On the other hand, it is also possible to include this information in the inputs of the strategy model.

The training **Train** (the meta-optimizer in the meta-learning context) may be performed by gradient-based optimization. The gradient-based optimization may comprise backpropagating a loss corresponding to the effectiveness of the black-box attack **BBA** to the set of parameters **PARS** of the strategy model **Str.** This may involve back-propagating the loss through the source model **Mod** using the white-box access to the model. This is illustrated by the dashed arrows in the figure. The gradient may provide a training signal based on which the parameters **PARS** of the strategy model may be updated. For example, stochastic gradient may be used, e.g., using the Adam optimizer as disclosed in Kingma and Ba, "Adam: A Method for Stochastic Optimization" (available at https://arxiv.org/abs/1412.6980 and incorporated herein by reference). As is known, such optimization methods may be heuristic and/or arrive at a local optimum. Training may be performed on an instance-by-instance basis or in batches, e.g., of at most or at least 64 or at most or at least 256 instances. The total loss improvement over the attack may be used as meta-loss to optimize in meta-training. The attack may be run on all images for the full budget $T$, e.g., even after the model was made to misclassify one or more images, to prevent discontinuity in the meta-loss due to removing images from the attacked batch.

To perform the gradient-based optimization, differentiable relaxations may be used of the loss function $l$ that compares the model outputs of the source computer vision model for the unperturbed and perturbed training images, and/or of the black-box attack **BBA,** in particular, the process of determining an updated current perturbation. The use of such differential relaxations allows gradient-based optimization to performed also when one or both of these functions are themselves not stochastically differentiable with respect to parameters **PARS**.

For example, training may be performed using stochastic gradient descent, e.g., on mini-batches $B \subseteq D$ with gradient

$$g = \nabla_\omega R(F, D, \omega) = \sum_{f_j \in F} \sum_{(x_i, y_i) \in B \subseteq D} \nabla_\omega L(f_j, x_i, y_i, \xi_{i,j}),$$

where $\xi_{i,j} \sim \mathcal{A}_\omega(L, f_j, x_i, v_i)$.

When using gradient-based optimization, the inventors found that problems with high variance and vanishing or exploding gradients can occur. Factors causing these problems can be the stochasticity of $\mathcal{A}_\omega$ induced by $\mathcal{D}^0$ and $\mathcal{D}_\omega$, the discrete *argmin* in the update step of $\mathcal{A}_\omega$, and the length $T$ of the unrolled optimization, e.g., hundreds or thousands of queries. To address these problems, the inventors envisaged to configure the optimization such that, when computing the gradient of the process of determining an updated current perturbation from a current perturbation, the gradient of the current perturbation is set to zero, in other words, the gradient is not propagated through the current perturbation. For example, this may be implemented as follows:

$$g = \frac{1}{T}\sum_{f_i} \sum_{(x_j,y_j)} \sum_{t=1}^{T-1} \nabla_\omega L(f_i, x_j, y_j, \Pi_{\mathcal{S}}(\xi^t + \delta^{t+1})).$$

Even though $\xi^t$ depends on $\omega$ for $t > 0$, gradients with respect to $\omega$ may not be not propagated through $\xi^t$ by setting $\nabla_\omega \xi^t := 1$. Effectively, $\mathcal{D}_\omega$ may be optimized in a myopic way, e.g., proposals $\delta^{t+1} \sim \mathcal{D}_\omega (t, \xi^0, \delta^0, ..., \xi^t, \delta^t)$ may be trained to maximally increase the immediate loss in step $t + 1$. This has been found to work well in practice, despite introducing a bias of acting myopic and greedy.

It is possible to re-write $\nabla_\omega L(f_i, x_j, y_j, \xi^t + \delta^{t+1}) = \nabla_{\delta^{t+1}} L(f_i, x_j, y_j, \xi^t + \delta^{t+1})\nabla_\omega \delta^{t+1}$. It is noted that $\nabla_\omega \delta^{t+1}$ may be a high variance estimate of $\nabla_\omega \mathcal{D}_\omega (t, \xi^0, \delta^0, ..,\xi^t \delta^t)$, depending on the stochasticity of $\mathcal{D}_\omega$. However, it has been found that $g$ is a good estimate in practice, e.g., because it may be unbiased and/or averaged over many steps $T$ and models and data.

It is noted that instead of gradient-based training **Train,** also gradient-free optimization of the meta-representation with respect to the meta-objective can be performed, for instance based on evolution strategies. This is particularly beneficial if the dimensionality of the meta-representation is low. Also this involves deriving a training signal from a determined effectiveness of the black-box attack **BBA** and updating the parameters **PARS** of the strategy model **Str** based on the training signal.

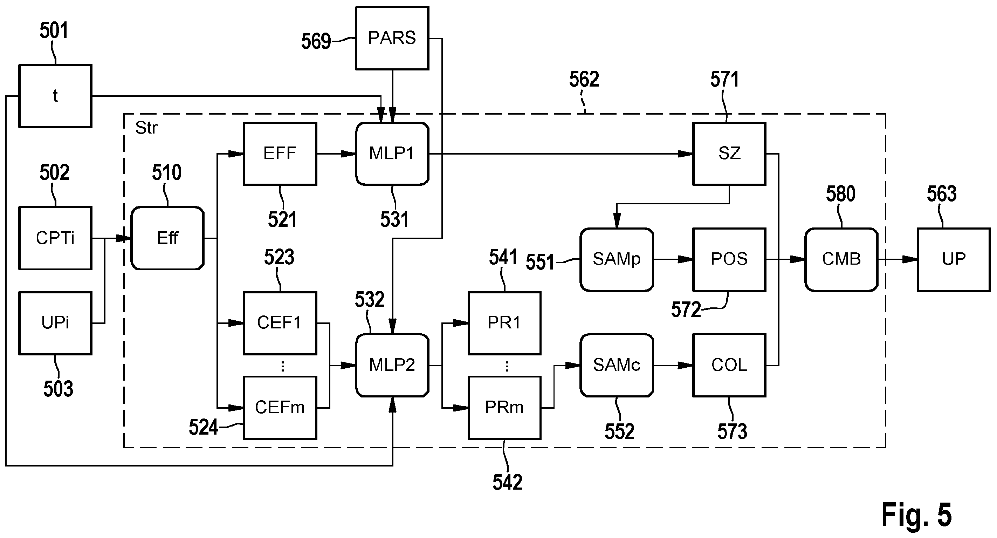

**Fig. 5** shows a detailed, yet non-limiting, example of how to use a trained strategy model **Str,** 562, to determine an update to a current perturbation in a black-box attack. In this specific example, a perturbation represents a shape (for example: a square) with a certain size, position and colour, that is applied to an input image. For example, this strategy model may be used in combination with the $\ell_\infty$-ball threat model, e.g., perturbation set $S = \{\xi \mid \|\xi\|_\infty \le \varepsilon\}$ and additive application of perturbation updates $a(x, \xi) = \max(\min(x + \xi, 1), 0)$. A black-box attack according to this trained strategy model may referred to as a meta-learned square attack (MSA).

The strategy model **Str** is used in this example to determine an update **UP,** 563, to a current perturbation **CPTi,** 502, for example, to sample $\delta^{t+1} \sim \mathcal{D}(t)$ using the notation introduced above. For example, the strategy model **Str** can be used to implement strategy model **Str,** 462, of Fig. 4. The strategy model can be used in combination with an initialization of the perturbation as known per se, e.g., using the stripe initialization of "Square Attack: a query-efficient black-box adversarial attack via random search".

As shown in the figure, strategy model **Str** may be configured to determine several separate components of the update, namely, a shape size **SZ,** 571; a shape position **POS,** 572; and/or a shape colour **COL,** 573. Generally, such components may be determined deterministically or stochastically, e.g., by determining parameters for sampling a value of the component and then sampling according to these parameters. Their determination may or may not use the trainable parameters **PARS**, 569 of the strategy model **Str.** Many variations are possible, but for the purpose of illustration, one particular way of determining the different components of the update is discussed now that was found to work well.

Generally, a shape size **SZ** may be determined representing a width of the shape in pixels $s_t = \pi^s(t) \in \{1, ...,s_{max}\}$. Here, $s_{max}$ may be chosen maximally with the constraint that sampled shapes do not exceed the image dimensions.

Given a determined shape size s, the position **POS** may be sampled in a sampling operation **SAMp,** 551, e.g., uniformly, e.g., as $(p_x,p_y) \sim \pi^p(s) \in \{1, ...,s_{max} - s\}^2$. This is an example of a stochastically determined component of the update **UP** that does not use the trainable parameters **PARS**.

Colour **COL** may be selected from $c \sim \pi^c \in \{c_1, ... c_m\}$. Possible colours $c_i$ may correspond to the eight corners of the RGB hypercube with $\ell_\infty$ norm $2\varepsilon$, e.g., $c_i \in (\pm 2\varepsilon, \pm 2\varepsilon, \pm 2\varepsilon)$. This may guarantee that update **UP** $\delta^{t+1}$ overwrites current perturbation **CPTi** $\xi^t$ within the square after projection on $\mathcal{S}$.

The update **UP** may be determined by combining **Cmb,** 580, the determined components, e.g., by setting update **UP,** $\delta^{t+1}$ to be zero everywhere except for a shape, e.g., a square, of size **SZ,** s at position **POS,** p with color COL, c.

In this example, a controller $\pi^s_{\omega_s}$, **MLP1,** 521 is used to determine the shape size **SZ** that uses trained parameters **PARS**. The shape size in this example is deterministically chosen.

In particular, the shape size controller may be implemented as a multi-layer perceptron (MLP) with parameters

$\omega_s$, **PARS**. The MLP may outputs a scalar value $s' \in \mathbb{R}$ indicating the size of the shape. The output value may be mapped to an actual size of the shape in the update **UP** via an update function, e.g., $s = \sigma(s') \cdot (s_{max} - 1) + 1$ with $\sigma(x) = 1/(1 + e^{-x})$.

In use, a continuous determined size, e.g., $s \in [1, s_{max}]$, may be mapped to a discrete value $\lfloor s \rfloor \in \{1, ..., s_{max}\}$. During training, a differential relaxation may be applied to the shape size controller such that it supports continuous shape sizes. This prevents the blocking of gradient flow during gradient-based training.

For example, in the case of squares, the relaxed sampling may be implemented by sampling a standard square of size $odd(s)^2$ with color $c_i$ and $odd(s) = 2 \cdot \lfloor \frac{s-1}{2} \rfloor + 1$ being the largest odd integer smaller than s. Thereupon, pixels in $\delta^t$ in the 4-neighborhood of the square may be filled by $\frac{s - odd(s)}{2} c_i$ and by $\left(\frac{s - odd(s)}{2}\right)^2 c_i$ in the 8-neighborhood pixels that are not in 4-neighborhood. Interestingly, the relaxed sampling may be conducted only during training and not during meta-testing or use.

As shown in this figure, the shape size controller MLP1 may receive as a first input an input **t**, 501 representing the current time step, e.g. the current iteration of the black-box attack. The current time step may be encoded to scale it to the unit interval [0,1], e.g., as $\log_2(\frac{t}{5000} + 1). ])$. This input allows the strategy model **Str** to schedule shape sizes based on the time step of the attack.

The figure further shows a second input **EFF,** 521, computed in an operation **Eff,** 510 from the previous perturbations $\xi^i$ **CPTi,** 502 and/or updates $\delta^i$ **UPi**, 503, to represent an effect of previous perturbations. This input allows adapting the shape size based on the recent success of proposals, e.g., by reducing the shape size if few proposals were successful recently. Thus, this input allows the strategy function Str to better adapt to models and data at hand. For example, let $r^{t+1} = H(L(f, x, y, \Pi_S(\xi^t + \delta^{t+1})) - L(f,x,y,\xi^t)) \in \{0,1\}$ be an indicator of whether adding $\delta^{t+1}$ at time $t + 1$ improved the loss, where $H$ is the Heaviside step-function. The second input **EFF** at time $t$ may be determined as $R^t = \gamma R^{t-1} + (1 - \gamma) r^t/r^0$, $R^0 = 1$. Here $\gamma$ is a decay term that controls how quickly past experience is forgotten and $r^0$ is a constant, e.g., set to 0.25, whose purpose is to ensure that the controller's second input has a similar scale as the first, e.g., the unit interval.

The figure also shows a further controller being used to determine the shape colour **COL**. The controller for the shape colour in this example is stochastic, involving a trainable model **MLP2,** 532, to determine parameters **PR1,** 541, ..., **PRm,** 542, where the model is parameterized by the trainable parameters **PARS** of the strategy model **Str.** The colour **COL** may be sampled according to the determined parameters **PRi** in a sampling operation **SAMc,** 552.

Specifically, the sampling **SAMc** of the colour controller $\pi^c_{\omega_c}$ may be a sampling from a categorical distribution $c^t \sim \text{Cat}(\alpha^t_1, ..., \alpha^t_m)$, where each parameter **PRi,** $\alpha^t_i \in \mathbb{R}$ is predicted by a Multi-Layer Perceptron (MLP) **MLP2** with weights $\omega_c$. The $m$ MLPs for the at may share their weights $\omega_c$, **PARS**, but may differ in their inputs. In order to differentiate through the categorical distribution at meta-train time, the categorical distribution may be reparametrized with Gumbel-softmax. Discrete (hard) samples may be sampled in the forward pass but treated as soft samples in the backward pass. It may further be ensured, in training and use, that every colour $c_i$ is sampled at least with probability $p^c_{min}$ by sampling with probability $m \cdot p^c_{min}$ from a uniform distribution rather than from the learned categorical distribution. This helps to ensure continuous exploration of all m colors.

As the figure shows, the colour controller may receive an input **t** representing the current time step, similarly to the shape size controller. This input may be used for respective applications of **MLP2** to determine respective parameters **PRi.** A further input **CEF1,** 523, ..., **CEFm,** 524, may represent an effect of previous perturbations, in this case conditioned on respective possible colours $c^t = c_i$. This input may be determined in operation **Eff** e.g. as

$$R^t_i = \begin{cases} \gamma R^{t-1}_i + (1 - \gamma)r^t/r^0 & \text{if } c^t = c_i \\ R^{t-1}_i & \text{otherwise} \end{cases}.$$

Including the effect of previous perturbations allows the controller to learn to adapt the colour based on recent success, e.g., to sample colours more often which recently resulted in higher success frequency.

As a concrete example, the shape size and/or shape colour model **MLP1, MLP2** may be implemented by a MLP with 2 hidden layers, 10 neurons each, and ReLU activations. Interestingly, fine-tuning may be skipped to encourage generalizability. The strategy model **Str** as described herein can for example be trained simultaneously for 10 epochs using Adam optimizer with batch size 100 and cosine step size schedule with learning rate 0.033.

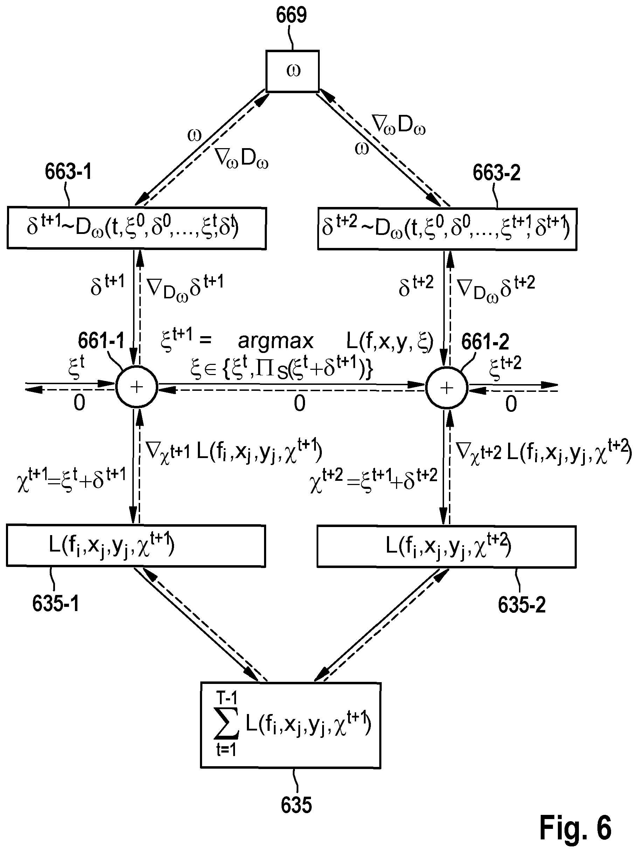

**Fig. 6** shows a detailed, yet non-limiting, example of how to determine a strategy model, for example, in combination with the techniques of Fig. 4. The figure illustrates two subsequent steps of a black-box attack. Shown are the parameters 669 of the strategy function; subsequent perturbations 663-1 and 663-2; updates 663-1 and 663-2 to the respective perturbations; training losses 635-1 and 635-2 corresponding to the respective perturbations, and the overall training loss 635.

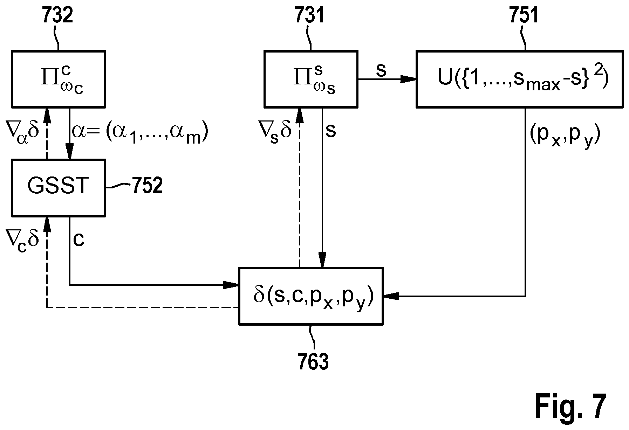

The figure shows the forward pass, as used both for the robustness evaluation and its training, illustrated by solid arrows. The figure also shows the backward pass as used to train the strategy model, illustrated using dashed arrows. $\nabla_x f$ denotes the gradient for scalar-valued functions $f$ and the Jacobian for vector-valued functions. Differential expressions with search distribution $\mathcal{D}_\omega$ are informal and can be handled for example with the reparameterization trick or other methods when applying the method to particular attacks, e.g., as discussed with respect to Fig. 5 and Fig. 7. It may be noted that the gradient, e.g., the Jacobian, of $\xi^{t+1}$ with respect to the current perturbation $\xi^t$ is set to 0 for all $t$, as also discussed with respect to Fig. 4, as illustrated by the arrow from perturbation 661-2 to perturbation 661-1, for example.

As also discussed with respect to Fig. 5, the following meta-objective may be optimized:

$$R(F, D, \omega) = \frac{1}{T}\sum_{f_i} \sum_{(x_j, y_j)} \sum_{t=1}^{T-1} L(f_i, x_j, y_j, \Pi_S(\xi^t + \delta^{t+1})),$$

where $\delta^{t+1} \sim \mathcal{D}_\omega (t, \xi^0, \delta^0, ..., \xi^t, \delta^t)$ and $L(f, x, y, \xi) := l(f(a(x, \xi)), y)$. As meta loss, total loss improvement over the attack may be used. Therefore, $l$ may be chosen in a way that it represents loss improvement caused by the update $\xi$, e.g.,

$$l(f(a(x, \xi)), y) = (h(f(a(x, \xi)), y) - h_{max})_+,$$

where $(x)_+$ is positive part function, $h(p, q)$ is cross-entropy loss and $h_{max}$ is the largest cross-entropy value obtained so far. In this case, at step $t$, $h_{max} = h(f(a(x, \Pi_S(\xi^t)), y)$ by design of the random search attack. Finally, instead of solving the problem of maximizing $R(F, D, \omega)$, the equivalent problem of minimizing $-R(F, D, \omega)$ may be solved. This may lead to the following loss for training the strategy model:

$$R_{MSA}(F, D, \omega) = -\frac{1}{T}\sum_{f_i} \sum_{(x_j, y_j)} \sum_{t=1}^{T-1} (h(f_i(a(x_j, \Pi_S(\xi^t + \delta^{t+1}))), y_j) - h(f_i(a(x_j, \Pi_S(\xi^t)), y_j))_+.$$

**Fig. 7** shows a detailed, yet non-limiting, example of how to determine a strategy model. This example corresponds to that shown in Fig. 5. In this example, the search distribution $\mathcal{D}_{(s,c)}$ from which the strategy model samples updates 763, depends on parameters $s$ and $\alpha$ that are provided by the square size controller $\pi^c_{\omega_c}$, 731, and the colour controller $\pi^s_{\omega_s}$, 732, respectively. Square positions $(p_x, p_y)$ are sampled from the uniform distribution $\mathcal{U}(\{1,..., s_{max} - s\}^2)$, 751.

The figure shows a Gumbel-softmax with straight-through estimator 752 used to obtain a differentiable relaxation of the strategy model during training. A detailed example is now provided of how to avoid blocking of gradient flow during the optimization using relaxed sampling of shapes, in this case, squares.

As also discussed elsewhere, during training of the strategy model, a gradient $g$ with respect to meta-parameters $\omega$ may be computed as:

$$g = \frac{1}{T}\sum_{f_i} \sum_{(x_j, y_j)} \sum_{t=1}^{T-1} \nabla_\omega L(f_i, x_j, y_j, \xi^t + \delta^{t+1}),$$

where in the above formula any projection operator $\Pi_S$ is incorporated into L. By rewriting $\nabla_\omega(f_i, x_j, y_j, \xi^t + \delta^{t+1}) = \nabla_{\delta^{t+1}} L(f_i, x_j, y_j, \xi^t + \delta^{t+1}) \nabla_\omega \delta^{t+1}$, the Jacobian $\nabla_\omega \delta^{t+1}$ of update vector $\delta^{t+1}$ may be computed with respect to meta-parameters $\omega$ of the strategy model.

Denote the parameters of the strategy model as $\omega = (\omega_s, \omega_c)$ and consider controllers $\pi^s_{\omega_s}$ and $\pi^c_{\omega_c}$ for the square size and colour respectively. Gradient $\nabla_{\omega_c} \delta^{t+1}$ may be computed via Gumbel softmax. Consider the computation of $\nabla_{\omega_s} \delta^{t+1}$. Since $\pi^s_{\omega_s}$ only controls the size of the square, its position and colour may be considered fixed when computing this gradient.

The square size may be represented by an integer square width from {1,...,w} where w is the image width. This parameter may be obtained by rounding a real value s obtained from the square size controller e.g. to the closest integer in the feasible range. During meta-training, it is undesirable to round the output s of $\pi_{\omega_s}^s$ since in that case, $\nabla_{\omega_s}\delta^{t+1} = 0$ holds almost everywhere. Therefore, a differentiable relaxation may be applied. In particular, the inner part of the square with width $odd(s) = 2 \cdot \lfloor \frac{s-1}{2} \rfloor + 1$ may be filled with the sampled colour c completely. The color of pixels in the 1-pixel boundary may be interpolated between the background colour $c_0$ and the new color c as: $k \cdot c + (1 - k) \cdot c_0$. The coefficient k of the new color may be set equal to the fraction that the square of non-integer width s occupies in the respective pixel.

Therefore, for the 4-neighborhood the new colour fraction is $k = \frac{s - odd(s)}{2}$ and for the pixel of 8-neighborhood that do not belong to 4-neighborhood $k = (\frac{s - odd(s)}{2})^2$.

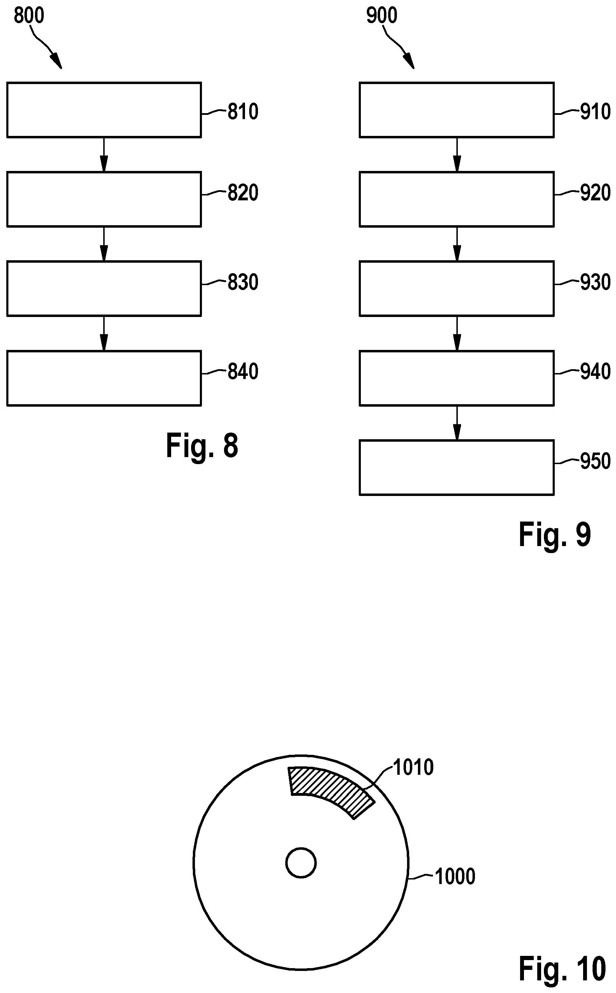

**Fig. 8** shows a block-diagram of computer-implemented method 800 of evaluating a robustness of a target computer vision model. The target computer vision model may have been trained to determine a model output for an input image. The robustness may be evaluated according to a black-box attack. The black-box attack may comprise repeatedly determining an update to a current perturbation. The method 800 may correspond to an operation of the system 100 of Fig. 1. However, this is not a limitation, in that the method 800 may also be performed using another system, apparatus or device.

The method 800 may comprise, in an operation titled "ACCESS TRAINED STRATEGY MODEL", accessing 810 parameters of a trained strategy model for use in the black-box attack to determine the update to the current perturbation. The strategy model may have been trained by: applying the black-box attack according to the strategy model to a source computer vision model and a training image for the source computer vision model; determining an effectiveness of the black-box attack; using white-box access to the source computer vision model, deriving a training signal from the determined effectiveness; and updating parameters of the strategy model based on the training signal.

The method 800 may comprise, in an operation titled "OBTAIN INPUT IMAGES", obtaining 820 one or more input images for the target computer vision model.

The method 800 may comprise, in an operation titled "APPLY BLACK-BOX ATTACK", applying 830 the black-box attack according to the trained strategy model to the target computer vision model and the one or more input images to obtain perturbations for the one or more input images.

The method 800 may comprise, in an operation titled "DETERMINE EFFECTIVENESS", determining 840 an effectiveness of the black-box attack by comparing model outputs of the target model for the input images and for the input images perturbed according to the obtained perturbations. The method 800 may further comprise outputting a robustness measure based on the determined effectiveness.

**Fig. 9** shows a block-diagram of computer-implemented method 900 of determining a strategy model for evaluating robustness of a target computer vision model. The target computer vision model may have been trained to determine a model output for an input image. The robustness may be evaluated according to a black-box attack. The black-box attack may comprise repeatedly determining an update to a current perturbation. The strategy model may be for use in the black-box attack to determine the update to the current perturbation, e.g., according to method 800 of Fig. 8. The method 900 may correspond to an operation of the system 100 of Fig. 1. However, this is not a limitation, in that the method 900 may also be performed using another system, apparatus or device.

The method 900 may comprise, in an operation titled "ACCESS SOURCE MODELS, IMAGES", obtaining 910 white-box access to one or more respective source computer vision models, and obtaining respective training datasets of training images for the respective source computer vision models.

The method 900 may comprise, in an operation titled "APPLY BLACK-BOX ATTACK USING STRATEGY MODEL", applying 920 the black-box attack according to the strategy model to a source computer vision model and a training image for the source computer vision model to obtain a perturbation for the training image.

The method 900 may comprise, in an operation titled "DERIVE TRAINING SIGNAL", using the white-box access to the source computer vision model, deriving 940 a training signal from the determined effectiveness.

The method 900 may comprise, in an operation titled "UPDATE STRATEGY MODEL", updating 950 parameters of the strategy model based on the training.

It will be appreciated that, in general, the operations of method 800 of Fig. 8 and method 900 of Fig. 9 may be performed in any suitable order, e.g., consecutively, simultaneously, or a combination thereof, subject to, where applicable, a particular order being necessitated, e.g., by input/output relations. Some or all of the methods may also be combined, e.g., method 800 of using a strategy model may be applied subsequently to this strategy model being trained according to method 900.

The method(s) may be implemented on a computer as a computer implemented method, as dedicated hardware, or as a combination of both. As also illustrated in **Fig. 10,** instructions for the computer, e.g., executable code, may be stored on a computer readable medium 1100, e.g., in the form of a series 1110 of machine-readable physical marks and/or as a series of elements having different electrical, e.g., magnetic, or optical properties or values. The medium 1100 may be transitory or non-transitory. Examples of computer readable mediums include memory devices, optical storage devices, integrated circuits, servers, online software, etc. Fig. 11 shows an optical disc 1100. Alternatively, the computer readable medium 1100 may comprise data 1110 representing a strategy model trained according a method described herein, and/or a computer vision model certified according to a method described herein.

Examples, embodiments or optional features, whether indicated as non-limiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

**Claims**

1. A computer-implemented method (900) of determining a strategy model for evaluating robustness of a target computer vision model, wherein the target computer vision model has been trained to determine a model output for an input image, wherein the robustness is evaluated using a random search-based black-box attack in which a perturbation is applied to the input image, wherein the perturbation is iteratively updated by determining and applying an update to a current perturbation, wherein the strategy model is trained to determine the update to the current perturbation in the black-box attack, and wherein the method comprises:

   - obtaining (910) white-box access to one or more respective source computer vision models, and obtaining respective training datasets of training images for the respective source computer vision models;
   - applying (920) the black-box attack to a source computer vision model and a training image for the source computer vision model to obtain a perturbation for the training image;
   - determining (930) an effectiveness of the black-box attack for the training image by comparing model outputs of the source computer vision model for the training image and for the training image perturbed according to the obtained perturbation;
   - using the white-box access to the source computer vision model, deriving (940) a training signal from the determined effectiveness; and
   - updating (950) parameters of the strategy model based on the training signal.

2. A computer-implemented method (800) of evaluating a robustness of a target computer vision model, wherein the target computer vision model has been trained to determine a model output for an input image, wherein the robustness is evaluated using a random search-based black-box attack in which a perturbation is applied to the input image, wherein the perturbation is iteratively updated by determining and applying an update to a current perturbation, wherein the method comprises:

   - accessing (810) parameters of a parameterized trained strategy model, wherein the trained strategy model is trained to determine the update to the current perturbation in the black-box attack, wherein the strategy model has been trained according to claim 1;
   - obtaining (820) one or more input images for the target computer vision model;
   - applying (830) the black-box attack to the target computer vision model and the one or more input images to obtain perturbations for the one or more input images;
   - determining (840) an effectiveness of the black-box attack by comparing model outputs of the target computer vision model for the input images and for the input images perturbed according to the obtained perturbations, and outputting a robustness measure based on the determined effectiveness.

3. The method (800) of claim 2, wherein applying the black-box attack to a computer vision model and an image comprises iteratively: updating the current perturbation according to the determined update and applying the computer vision model to the input image perturbed according to the updated current perturbation.

4. The method (800) of claim 3, comprising comparing effects on the model output of the current perturbation and the updated current perturbation, and selecting the current perturbation or the updated current perturbation based on the compared effects.

5. The method (800) of claim 3 or 4, wherein the strategy model is configured to deterministically determine a first component of the update and/or to stochastically determine a second component of the update.

6. The method (800) of any preceding claim, wherein the strategy model is configured to determine one or more of a shape size, a shape colour, parameters for sampling the shape size, and parameters for sampling the shape colour.

7. The method (800) of any preceding claim, wherein the target computer vision model is an image classifier.

8. The method (800) of any preceding claim, wherein the strategy model receives an input that depends on the current perturbation and on at least one perturbation prior to the current perturbation.

9. The method (800) of claim 8, wherein the strategy model receives an input representing a current time step and/or an input representing an effect of previous perturbations.

10. The method (800) of any one of the preceding claims, wherein the strategy model does not receive the image or the image perturbed according to the current perturbation as input.

11. The method (800) of any preceding claim, comprising:

 - training or re-training the target computer vision model;
 - after the training or re-training, evaluating the robustness of the target computer vision model to determine if the target computer vision model is sufficiently robust;
 - rejecting the target computer vision model if the model is not sufficiently robust, and/or certifying the target computer vision model if the model is sufficiently robust.

12. The method (900) of claim 1, wherein the training comprises computing a gradient of determining an updated current perturbation from a current perturbation with respect to the parameters of the strategy model, wherein a gradient of the current perturbation is set to zero.

13. A system (100) for evaluating a robustness of a target computer vision model (041), wherein the target computer vision model has been trained to determine a model output for an input image, wherein the robustness is evaluated using a random search-based black-box attack in which a perturbation is applied to the input image, wherein the perturbation is iteratively updated by determining and applying an update to a current perturbation, wherein the system comprises:

 - a data interface (120) for accessing parameters (050) of a parameterized trained strategy model, wherein the trained strategy model is trained to determine the update to the current perturbation in the black-box attack, wherein the strategy model has been trained by: applying the black-box attack according to the strategy model to a source computer vision model and a training image for the source computer vision model; determining an effectiveness of the black-box attack; using white-box access to the source computer vision model, deriving a training signal from the determined effectiveness; and updating parameters of the strategy model based on the training signal;
 - a processor subsystem (140) configured to:

 - obtain one or more input images for the target computer vision model;
 - apply the black-box attack to the target computer vision model and the one or more input images to obtain perturbations for the one or more input images;
 - determine an effectiveness of the black-box attack by comparing model outputs of the target computer vision model for the input images and for the input images perturbed according to the obtained perturbations, and outputting a robustness measure based on the determined effectiveness.

**14.** A system (100) for determining a strategy model (050) for evaluating robustness of a target computer vision model (041), wherein the target computer vision model has been trained to determine a model output for an input image, wherein the robustness is evaluated using a random search-based black-box attack in which a perturbation is applied to the input image, wherein the perturbation is iteratively updated by determining and applying an update to a current perturbation, wherein the strategy model is trained to determine the update to the current perturbation in the black-box attack, wherein the system comprises:

> - a data interface (120) for obtaining white-box access to one or more respective source computer vision models, and obtaining respective training datasets (040) of training images for the respective source computer vision models;
> - a processor subsystem (140) configured to:
>
> > - apply the black-box attack to a source computer vision model and a training image for the source computer vision model to obtain a perturbation for the training image;
> > - determine an effectiveness of the black-box attack for the training image by comparing model outputs of the source computer vision model for the training image and for the training image perturbed according to the obtained perturbation;
> > - using the white-box access to the source computer vision model, derive a training signal from the determined effectiveness; and
> > - update parameters of the strategy model based on the training signal.

**15.** A transitory or non-transitory computer-readable medium (1000) comprising data (1010) representing one or more of:

> - instructions which, when executed by a processor system, cause the processor system to perform the method according to claim 1 and/or claim 2;
> - a strategy model trained according to the method of claim 1;
> - a computer vision model certified according to the method of claim 11.

**Patentansprüche**

**1.** Computerimplementiertes Verfahren (900) zum Bestimmen eines Strategiemodells zum Bewerten der Robustheit eines Zielcomputervisionsmodells, wobei das Zielcomputervisionsmodell trainiert wurde, eine Modellausgabe für ein Eingabebild zu bestimmen, die Robustheit unter Verwendung eines zufälligen suchbasierten Blackboxangriffs, in dem eine Störung auf das Eingabebild aufgebracht wird, bewertet wird, die Störung durch Bestimmen und Aufbringen einer Aktualisierung einer aktuellen Störung iterativ aktualisiert wird, das Strategiemodell trainiert ist, die Aktualisierung der aktuellen Störung im Blackboxangriff zu bestimmen, und das Verfahren Folgendes umfasst:

> - Erhalten (910) eines Weißboxzugriffs auf ein oder mehrere jeweilige Quellcomputervisionsmodelle und Erhalten jeweiliger Trainingsdatensätze aus Trainingsbildern für die jeweiligen Quellcomputervisionsmodelle;
> - Anwenden (920) des Blackboxangriffs auf ein Quellcomputervisionsmodell und ein Trainingsbild für das Quellcomputervisionsmodell, um eine Störung für das Trainingsbild zu erhalten;
> - Bestimmen (930) einer Wirksamkeit des Blackboxangriffs für das Trainingsbild durch Vergleichen von Modellausgaben des Quellcomputervisionsmodells für das Trainingsbild und für das Trainingsbild, das gemäß der erhaltenen Störung gestört ist;
> - unter Verwendung des Weißboxzugriffs auf das Quellcomputervisionsmodell Herleiten (940) eines Trainingssignals aus der bestimmten Wirksamkeit und
> - Aktualisieren (950) von Parametern des Strategiemodells auf der Grundlage des Trainingssignals.

**2.** Computerimplementiertes Verfahren (800) zum Bewerten einer Robustheit eines Zielcomputervisionmodells, wobei das Zielcomputervisionsmodell trainiert wurde, um eine Modellausgabe für ein Eingabebild zu bestimmen, die Robustheit unter Verwendung eines zufälligen suchbasierten Blackboxangriffs, in dem eine Störung auf das Eingabebild aufgebracht wird, bewertet wird, die Störung durch Bestimmen und Aufbringen einer Aktualisierung einer aktuellen Störung iterativ aktualisiert wird und das Verfahren Folgendes umfasst:

> - Zugreifen (810) auf Parameter eines parametrisierten trainierten Strategiemodells, wobei das trainierte Strategiemodell trainiert ist, die Aktualisierung der aktuellen Störung im Blackboxangriff zu bestimmen, und das Strategiemodell nach Anspruch 1 trainiert wurde;

- Erhalten (820) eines oder mehrerer Eingabebilder für das Zielcomputervisionsmodell;
- Anwenden (830) des Blackboxangriffs auf das Zielcomputervisionsmodell und das eine oder die mehreren Eingabebilder, um Störungen für das eine oder die mehreren Eingabebilder zu erhalten;
- Bestimmen (840) einer Wirksamkeit des Blackboxangriffs durch Vergleichen von Modellausgaben des Zielcomputervisionsmodells für die Eingabebilder und für die Eingabebilder, die gemäß den erhaltenen Störungen gestört sind, und Ausgeben eines Robustheitsmaßes auf der Grundlage der bestimmten Wirksamkeit.

3. Verfahren (800) nach Anspruch 2, wobei das Anwenden des Blackboxangriffs auf ein Computervisionsmodell und ein Bild Folgendes iterativ umfasst: Aktualisieren der aktuellen Störung gemäß der bestimmten Aktualisierung und Anwenden des Computervisionsmodells auf das Eingabebild, das gemäß der aktualisierten aktuellen Störung gestört ist.

4. Verfahren (800) nach Anspruch 3, das ein Vergleichen von Wirkungen auf die Modellausgabe der aktuellen Störung und der aktualisierten aktuellen Störung und ein Wählen der aktuellen Störung oder der aktualisierten aktuellen Störung auf der Grundlage der verglichenen Wirkungen umfasst.

5. Verfahren (800) nach Anspruch 3 oder 4, wobei das Strategiemodell konfiguriert ist, eine erste Komponente der Aktualisierung deterministisch zu bestimmen und/oder eine zweite Komponente der Aktualisierung stochastisch zu bestimmen.

6. Verfahren (800) nach einem vorhergehenden Anspruch, wobei das Strategiemodell konfiguriert ist, eines oder mehrere von einer Formgröße, einer Formfarbe, Parametern zum Abtasten der Formgröße und Parametern zum Abtasten der Formfarbe zu bestimmen.

7. Verfahren (800) nach einem vorhergehenden Anspruch, wobei das Zielcomputervisionsmodell ein Bildklassifikator ist.

8. Verfahren (800) nach einem vorhergehenden Anspruch, wobei das Strategiemodell eine Eingabe empfängt, die von der aktuellen Störung und mindestens einer Störung vor der aktuellen Störung abhängt.

9. Verfahren (800) nach Anspruch 8, wobei das Strategiemodell eine Eingabe, die einen aktuellen Zeitschritt repräsentiert, und/oder eine Eingabe, die eine Wirkung vorhergehender Störungen repräsentiert, empfängt.

10. Verfahren (800) nach einem der vorhergehenden Ansprüche, wobei das Strategiemodell das Bild oder das Bild, das gemäß der aktuellen Störung gestört ist, nicht als Eingabe empfängt.

11. Verfahren (800) nach einem vorhergehenden Anspruch, das Folgendes umfasst:

- Trainieren oder Neutrainieren des Zielcomputervisionsmodells;
- nach dem Trainieren oder Neutrainieren Bewerten der Robustheit des Zielcomputervisionsmodells, um zu bestimmen, ob das Zielcomputervisionsmodell ausreichend robust ist; und
- Ablehnen des Zielcomputervisionsmodells, falls das Modell nicht ausreichend robust ist, und/oder Zertifizieren des Zielcomputervisionsmodells, falls das Modell ausreichend robust ist.

12. Das Verfahren (900) nach Anspruch 1, wobei das Trainieren ein Berechnen eines Gradienten des Bestimmens einer aktualisierten aktuellen Störung aus einer aktuellen Störung in Bezug auf die Parameter des Strategiemodells umfasst, wobei ein Gradient der aktuellen Störung zu null gesetzt wird.

13. System (100) zum Bewerten einer Robustheit eines Zielcomputervisionsmodells (041), wobei das Zielcomputervisionsmodell trainiert wurde, eine Modellausgabe für ein Eingabebild zu bestimmen, die Robustheit unter Verwendung eines zufälligen suchbasierten Blackboxangriffs, in dem eine Störung auf das Eingabebild aufgebracht wird, bewertet wird, die Störung durch Bestimmen und Aufbringen einer Aktualisierung einer aktuellen Störung iterativ aktualisiert wird und das System Folgendes umfasst:

- eine Datenschnittstelle (120) zum Zugreifen auf Parameter (050) eines parametrisierten trainierten Strategiemodells, wobei das trainierte Strategiemodell trainiert ist, die Aktualisierung der aktuellen Störung im Blackboxangriff zu bestimmen, und das Strategiemodell durch Folgendes trainiert wurde: Anwenden des Blackboxangriffs gemäß dem Strategiemodell auf ein Quellcomputervisionsmodell und ein Trainingsbild für das Quellcomputervisionsmodell; Bestimmen einer Wirksamkeit des Blackboxangriffs; unter Verwendung eines Weißboxzugriffs auf das Quellcomputervisionsmodell Herleiten eines Trainingssignals aus der bestimmten Wirksamkeit und Aktualisieren von Parametern des Strategiemodells auf der Grundlage des Trainingssignals;

- ein Prozessoruntersystem (140), das konfiguriert ist zum:
- Erhalten eines oder mehrerer Eingabebilder für das Zielcomputervisionsmodell;
- Anwenden des Blackboxangriffs auf das Zielcomputervisionsmodell und das eine oder die mehreren Eingabebilder, um Störungen für das eine oder die mehreren Eingabebilder zu erhalten;
- Bestimmen einer Wirksamkeit des Blackboxangriffs durch Vergleichen von Modellausgaben des Zielcomputervisionsmodells für die Eingabebilder und für die Eingabebilder, die gemäß den erhaltenen Störungen gestört sind, und Ausgeben eines Robustheitsmaßes auf der Grundlage der bestimmten Wirksamkeit.

14. System (100) zum Bestimmen eines Strategiemodells (050) zum Bewerten der Robustheit eines Zielcomputervisionsmodells (041), wobei das Zielcomputervisionsmodell trainiert wurde, eine Modellausgabe für ein Eingabebild zu bestimmen, die Robustheit unter Verwendung eines zufälligen suchbasierten Blackboxangriffs, in dem eine Störung auf das Eingabebild aufgebracht wird, bewertet wird, die Störung durch Bestimmen und Aufbringen einer Aktualisierung einer aktuellen Störung iterativ aktualisiert wird, das Strategiemodell trainiert ist, die Aktualisierung der aktuellen Störung im Blackboxangriff zu bestimmen, und das System Folgendes umfasst:

- eine Datenschnittstelle (120) zum Erhalten von Weißboxzugriff auf ein oder mehrere jeweilige Quellcomputervisionsmodelle und Erhalten jeweiliger Trainingsdatensätze (040) von Trainingsbildern für die jeweiligen Quellcomputervisionsmodelle;
- ein Prozessoruntersystem (140), das konfiguriert ist zum:
- Anwenden des Blackboxangriffs auf ein Quellcomputervisionsmodell und ein Trainingsbild für das Quellcomputervisionsmodell, um eine Störung für das Trainingsbild zu erhalten;
- Bestimmen einer Wirksamkeit des Blackboxangriffs für das Trainingsbild durch Vergleichen von Modellausgaben des Quellcomputervisionsmodells für das Trainingsbild und für das Trainingsbild, das gemäß der erhaltenen Störung gestört ist;
- unter Verwendung des Weißboxzugriffs auf das Quellcomputervisionsmodell Herleiten eines Trainingssignals aus der bestimmten Wirksamkeit und
- Aktualisieren von Parametern des Strategiemodells auf der Grundlage des Trainingssignals.

15. Transitorisches oder nicht transitorisches computerlesbares Medium (1000), das Daten (1010) umfasst, die eines oder mehrere der Folgenden repräsentieren:

- Befehle, die, wenn sie durch ein Prozessorsystem ausgeführt werden, verursachen, dass das Prozessorsystem das Verfahren nach Anspruch 1 und/oder Anspruch 2 durchführt;
- ein Strategiemodell, das gemäß dem Verfahren nach Anspruch 1 trainiert ist; und/oder
- ein Computervisionsmodell, das gemäß dem Verfahren nach Anspruch 11 zertifiziert ist.

**Revendications**

1. Procédé mis en œuvre par ordinateur (900) pour déterminer un modèle de stratégie pour l'évaluation de la robustesse d'un modèle de vision par ordinateur cible, le modèle de vision par ordinateur cible ayant été entraîné pour déterminer un modèle de sortie pour une image d'entrée, la robustesse étant évaluée à l'aide d'une attaque "boîte noire" basée sur une recherche aléatoire, dans laquelle une perturbation est appliquée à l'image d'entrée, la perturbation étant mise à jour de manière itérative par détermination et application d'une mise à jour sur une perturbation actuelle, le modèle de stratégie étant entraîné pour déterminer la mise à jour de la perturbation actuelle dans l'attaque "boîte noire", et le procédé comprenant :

- l'obtention (910) d'un accès "boîte blanche" à un ou plusieurs modèles de vision par ordinateur sources respectifs, et l'obtention d'ensembles de données d'entraînement respectifs pour l'entraînement d'images pour les modèles de vision par ordinateur sources respectifs ;
- l'application (920) de l'attaque "boîte noire" à un modèle de vision par ordinateur source et une image d'entraînement pour le modèle de vision par ordinateur source pour obtenir une perturbation pour l'image d'entraînement ;
- la détermination (930) d'une efficacité de l'attaque "boîte noire" pour l'image d'entraînement par comparaison des modèles de sortie du modèle de vision par ordinateur source pour l'image d'entraînement et pour l'image d'entraînement perturbée selon la perturbation obtenue ;
- à l'aide de l'accès "boîte blanche" au modèle de vision par ordinateur source, la déduction (940) d'un signal d'entraînement à partir de l'efficacité déterminée ; et
- la mise à jour (950) de paramètres du modèle de stratégie sur la base du signal d'entraînement.

2. Procédé mis en œuvre par ordinateur (800) pour évaluer la robustesse d'un modèle de vision par ordinateur cible, le modèle de vision par ordinateur cible ayant été entraîné pour déterminer un modèle de sortie pour une image d'entrée, la robustesse étant évaluée à l'aide d'une attaque "boîte noire" basée sur une recherche aléatoire, dans laquelle une perturbation est appliquée à l'image d'entrée, la perturbation étant mise à jour de manière itérative par détermination et application d'une mise à jour sur une perturbation actuelle, le procédé comprenant :

- l'accès (810) à des paramètres d'un modèle de stratégie entraîné et paramétré, le modèle de stratégie entraîné étant entraîné pour déterminer la mise à jour de la perturbation actuelle dans l'attaque "boîte noire", le modèle de stratégie ayant été entraîné selon le revendication 1 ;
- l'obtention (820) d'une ou plusieurs images d'entrée pour le modèle de vision par ordinateur cible ;
- l'application (830) de l'attaque "boîte noire" au modèle de vision par ordinateur cible et la ou les images d'entrée pour obtenir des perturbations pour la ou les images d'entrée ;
- la détermination (840) d'une efficacité de l'attaque "boîte noire" par comparaison des modèles de sortie du modèle de vision par ordinateur cible pour les images d'entrée et pour les images d'entrée perturbées selon les perturbations obtenues, et l'émission d'une mesure de robustesse sur la base de l'efficacité déterminée.

3. Procédé (800) selon la revendication 2, dans lequel l'application de l'attaque "boîte noire" à un modèle de vision par ordinateur et une image comprend, de manière itérative : la mise à jour de la perturbation actuelle selon la mise à jour déterminée et l'application du modèle de vision par ordinateur à l'image d'entrée perturbée selon la perturbation actuelle mise à jour.

4. Procédé (800) selon la revendication 3, comprenant la comparaison d'effets sur le modèle de sortie de la perturbation actuelle et la perturbation actuelle mise à jour, et la sélection de la perturbation actuelle ou de la perturbation actuelle mise à jour sur la base des effets comparés.

5. Procédé (800) selon la revendication 3 ou 4, dans lequel le modèle de stratégie est configuré pour déterminer de manière déterministe une première composante de la mise à jour et/ou déterminer de manière stochastique une deuxième composante de la mise à jour.

6. Procédé (800) selon l'une quelconque des revendications précédentes, dans lequel le modèle de stratégie est configuré pour déterminer un ou plusieurs éléments parmi la taille d'une forme, la couleur d'une forme, les paramètres d'échantillonnage de la taille de la forme et les paramètres d'échantillonnage de la couleur de la forme.

7. Procédé (800) selon l'une quelconque des revendications précédentes, dans lequel le modèle de vision par ordinateur cible est un classificateur d'images.

8. Procédé (800) selon l'une quelconque des revendications précédentes, dans lequel le modèle de stratégie reçoit une entrée qui dépend de la perturbation actuelle et d'au moins une perturbation avant la perturbation actuelle.

9. Procédé (800) selon la revendication 8, dans lequel le modèle de stratégie reçoit une entrée représentant un pas de temps actuel et/ou une entrée représentant un effet des perturbations précédentes.

10. Procédé (800) selon l'une quelconque des revendications précédentes, dans lequel le modèle de stratégie ne reçoit pas en entrée l'image ou l'image perturbée selon la perturbation actuelle.

11. Procédé (800) selon l'une quelconque des revendications précédentes, comprenant :

- l'entraînement ou le réentraînement du modèle de vision par ordinateur ;
- après l'entraînement ou le réentraînement du modèle de vision par ordinateur, l'évaluation de la robustesse du modèle de vision par ordinateur cible pour déterminer si le modèle de vision par ordinateur cible est suffisamment robuste ;
- le rejet du modèle de vision par ordinateur cible si le modèle n'est pas suffisamment robuste, et/ou la certification du modèle de vision par ordinateur cible si le modèle est suffisamment robuste.

**12.** Procédé (900) selon la revendication 1, dans lequel l'entraînement comprend le calcul d'un gradient de détermination d'une perturbation actuelle mise à jour à partir d'une perturbation actuelle par rapport aux paramètres du modèle de stratégie, un gradient de la perturbation actuelle étant mis à zéro.

**13.** Système (100) pour évaluer la robustesse d'un modèle de vision par ordinateur cible (041), le modèle de vision par ordinateur cible ayant été entraîné pour déterminer un modèle de sortie pour une image d'entrée, la robustesse étant évaluée à l'aide d'une attaque "boîte noire" basée sur une recherche aléatoire, dans laquelle une perturbation est appliquée à l'image d'entrée, la perturbation étant mise à jour de manière itérative par détermination et application d'une mise à jour sur une perturbation actuelle, le système comprenant :

- une interface de données (120) pour accéder à des paramètres (050) d'un modèle de stratégie entraîné et paramétré, le modèle de stratégie entraîné étant entraîné pour déterminer la mise à jour de la perturbation actuelle dans l'attaque "boîte noire", le modèle de stratégie ayant été entraîné par : application de l'attaque "boîte noire" selon le modèle de stratégie à un modèle de vision par ordinateur source et une image d'entraînement pour le modèle de vision par ordinateur source ; détermination d'une efficacité de l'attaque "boîte noire" ; à l'aide de l'accès "boîte blanche" au modèle de vision par ordinateur source, la déduction d'un signal d'entraînement à partir de l'efficacité déterminée ; et la mise à jour de paramètres du modèle de stratégie sur la base du signal d'entraînement ;
- un sous-système processeur (140) configuré pour :
- obtenir une ou plusieurs images d'entrée pour le modèle de vision par ordinateur cible ;
- appliquer l'attaque "boîte noire" au modèle de vision par ordinateur cible et la ou les images d'entrée pour obtenir des perturbations pour la ou les images d'entrée ;
- déterminer une efficacité de l'attaque "boîte noire" par comparaison des modèles de sortie du modèle de vision par ordinateur cible pour les images d'entrée et pour les images d'entrée perturbées selon les perturbations obtenues, et l'émission d'une mesure de robustesse sur la base de l'efficacité déterminée.

**14.** Système (100) pour déterminer un modèle de stratégie (050) pour l'évaluation de la robustesse d'un modèle de vision par ordinateur cible (041), le modèle de vision par ordinateur cible ayant été entraîné pour déterminer un modèle de sortie pour une image d'entrée, la robustesse étant évaluée à l'aide d'une attaque "boîte noire" basée sur une recherche aléatoire, dans laquelle une perturbation est appliquée à l'image d'entrée, la perturbation étant mise à jour de manière itérative par détermination et application d'une mise à jour sur une perturbation actuelle, le modèle de stratégie étant entraîné pour déterminer la mise à jour de la perturbation actuelle dans l'attaque "boîte noire", le système comprenant :

- une interface de données (120) pour obtenir un accès "boîte blanche" à un ou plusieurs modèles de vision par ordinateur sources respectifs, et obtenir des ensembles de données d'entraînement respectifs (040) pour l'entraînement d'images pour les modèles de vision par ordinateur sources respectifs ;
- un sous-système processeur (140) configuré pour :
- appliquer l'attaque "boîte noire" à un modèle de vision par ordinateur source et une image d'entraînement pour le modèle de vision par ordinateur source pour obtenir une perturbation pour l'image d'entraînement ;
- déterminer une efficacité de l'attaque "boîte noire" pour l'image d'entraînement par comparaison des modèles de sortie du modèle de vision par ordinateur source pour l'image d'entraînement et pour l'image d'entraînement perturbée selon la perturbation obtenue ;
- à l'aide de l'accès "boîte blanche" au modèle de vision par ordinateur source, déduire un signal d'entraînement à partir de l'efficacité déterminée ; et
- mettre à jour des paramètres du modèle de stratégie sur la base du signal d'entraînement.

**15.** Support transitoire ou non-transitoire lisible par ordinateur (1000) comprenant des données (1010) représentant un ou plusieurs des éléments suivants :

- des instructions qui, à leur exécution par un système processeur, amènent le système processeur à réaliser le procédé selon la revendication 1 et/ou la revendication 2 ;
- un modèle de stratégie entraîné selon le procédé de la revendication 1 ;
- un modèle de vision par ordinateur certifié selon le procédé de la revendication 11.

Fig. 1

Fig. 2

Fig. 3

Fig. 4

Fig. 5

**Fig. 6**

Fig. 7

800

810

820

830

840

**Fig. 8**

900

910

920

930

940

950

**Fig. 9**

1010

1000

**Fig. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. ANDRIUSHCHENKO et al.** *Square Attack: a query-efficient black-box adversarial attack via random search*, https://arxiv.org/abs/1912.00049

- **KINGMA ; BA**. *Adam: A Method for Stochastic Optimization*, https://arxiv.org/abs/1412.6980